(19) Europäisches Patentamt / European Patent Office / Office européen des brevets

(11) **EP 2 890 643 B1**

(12) **EUROPEAN PATENT SPECIFICATION**

(45) Date of publication and mention
of the grant of the patent:
**04.11.2020 Bulletin 2020/45**

(21) Application number: **13756103.1**

(22) Date of filing: **28.08.2013**

(51) Int Cl.:
*C02F 1/00* (2006.01)     *C02F 5/00* (2006.01)
*C02F 1/42* (2006.01)

(86) International application number:
**PCT/EP2013/067761**

(87) International publication number:
**WO 2014/033147 (06.03.2014 Gazette 2014/10)**

(54) **ADJUSTING A SYSTEM FOR CONTROLLING OPERATION OF A FLUID TREATMENT APPARATUS**

EINSTELLEN EINES SYSTEMS ZUR STEUERUNG DES BETRIEBS EINER FLÜSSIGKEITSBEHANDLUNGSVORRICHTUNG

RÉGLAGE D'UN SYSTÈME POUR COMMANDER LE FONCTIONNEMENT D'UN APPAREIL DE TRAITEMENT DE FLUIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.08.2012 EP 12182116**

(43) Date of publication of application:
**08.07.2015 Bulletin 2015/28**

(73) Proprietor: **Brita GmbH**
**65232 Taunusstein (DE)**

(72) Inventors:
• **NAGEL, Thomas**
  **35796 Weinbach (DE)**
• **WEIDNER, Peter**
  **92444 Rötz (DE)**
• **CONRADT, Berthold**
  **65205 Wiesbaden (DE)**

(56) References cited:
DE-A1- 19 918 073     DE-A1-102010 001 373
US-A1- 2002 117 430     US-A1- 2007 114 178

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a method of adapting a system for controlling operation of a fluid treatment apparatus according to the pre-amble of claim 1.

The invention also relates to a method of determining a measure of a concentration of components removable from fluid by a fluid treatment part of a fluid treatment apparatus.

The invention also relates to a system for controlling the operation of a fluid treatment apparatus according to the pre-amble of claim 13.

The invention also relates to a computer program product.

DE 199 18 073 A1 discloses a process water softening and mixing apparatus with two water softening devices operating in parallel. The water softening devices are each in fluid communication with a soft water line via an electrically controlled soft water valve. A mixing valve is arranged in the soft water line downstream of a branch point, to which, in addition to the soft water line, a second raw water line is led, and in which the soft water is mixed with the raw water in a mixing ratio determined by a control signal under the control of a softening control unit.

DE 10 2010 001 373 A1 discloses water treatment apparatus having a softening device, in particular including an ion exchange resin, a conductivity sensor, an automatically adjustable blending device for mixing a blending water flow from a first, softened partial flow with a second, raw water-carrying partial flow and an electronic control device, by means of which a total hardness of the raw water can be determined from an electrical conductivity of the raw water, soft water or blended water, measured by means of the conductivity sensor, and with the aid of one or more characteristic curves for calibration stored in the electronic control device. Taking into account the determined total hardness of the raw water, the adjustment position of the blending device can be controlled by means of the electronic control device, so that the water hardness of the blended water flow is set to a prescribed target value. The characteristic calibration curve is a straight line through the origin with a gradient m. The total hardness $G_{LF}$ of the raw water can be calculated from the measured raw water conductivity $LF_{roh}$ according to $G_{LF} = LF_{roh}/m$. The hardness of the blended water $V_{LF}$ then results from the equation $V_{LF} = n_{roh} \cdot LF_{roh} \cdot 1/m$, wherein $n_{roh}$ is the proportion of the raw water in the blended water. The variable $n_{roh}$ can be determined by a direct or indirect determination of the partial flows of soft and raw water by means of flow meters, or estimated from a known adjustment position of the blending device.

WO 2011/064325 A2 discloses a method of operating a water softening apparatus, wherein the water softening apparatus includes a softening device, a sensor for measuring a raw water hardness or a means for providing a raw water hardness as input, an automatically adjustable blending device for mixing a blending water flow from a first, softened component stream and a second, raw water conducting component stream and an electronic control device for regulating the adjustment position of the blending device, so that the water hardness in the blended water stream is set to a specified target value. For regulation of the adjustment position, the measured raw water hardness or raw water hardness provided as input is evaluated and a dependence of the ratio between the component streams on the adjustment position of the blending device specific to the water softening apparatus, stored in the control device, is assumed. The specific dependence and a further correction function are typically determined in advance (and typically only once) for the type of apparatus and stored in the control device by the manufacturer. The ratio between the component streams does not need to be monitored experimentally during operation, as a consequence of which the device and computational complexity are reduced considerably.

A problem of this method is that it takes no account of variability between apparatuses of the same type and the conditions under which they are operated, once installed. Typically, the blending device will include a motor and one or more valves. The known method requires the manufacturer to maintain narrow tolerance ranges for the transmission system linking the motor to the valves. Moreover, the manufacturer must assume typical operating conditions, in particular inlet and outlet pressures for each apparatus of a particular type. If the actual difference between the inlet and outlet pressure is not what the manufacturer assumed and the flow resistances of the first and second fluid paths do not vary in the same manner with the pressure difference, then a particular setting of the blending device will correspond to different ratios between the rates of flow through the first and second fluid paths for different values of the actual pressure difference.

It is an object of the invention to provide methods a system and computer program of the type mentioned above, that enable the determination and/or control of the concentration of components removable to at least a certain extent by the bypassed fluid treatment part that are able to take account of variability in operating conditions and mechanical components of the device for adjusting the blending fraction.

This object is achieved according to a first aspect by the method of adapting a system for controlling the operation of a fluid treatment apparatus according to the invention, which is characterised in that determining the calibration data further includes obtaining values of the parameter before and after the change from at least one of the at least one sensors that is located downstream of the mixing location, thereby making possible to measure the effect of a change in setting of the device .

Because each first fluid path includes at least one fluid treatment part for treating fluid to remove to at least a certain extent at least some types of components in fluid led through the fluid treatment part and each second fluid path bypasses at least one of the fluid treatment parts, the concentration of components removable by the bypassed fluid treatment part or parts in a mix of fluid downstream of the mixing location will vary according to the blending fraction. Because at least one sensor is provided for obtaining values of a parameter of the fluid depending at least partly on a concentration of the components removable by the bypassed fluid treatment part, the variation is measurable. By causing at least one change of the setting, and obtaining values of the parameter before and after the change from one of the at least one sensors located downstream of the mixing location, it is possible to measure the effect of the change in setting. The reference setting may be a single reference setting, e.g. one associated with a blending fraction of zero. The change in setting may be a unit change, so that no more than a single value representative of the ratio of the blending fraction change to the settings change is stored. Alternatively, and particularly where the dependency is more complicated, values representative of changes associated with certain changes in setting (e.g. + 5 % and -5 % of the total extent of a range of possible values) can be stored for each of a range of setting values (e.g. on a scale of 0 to 1, being e.g. the assumed position of an actuator operating the device between two end points). The method can be carried out in the field, i.e. at the location of the installed apparatus. It can in particular be carried out by an automated system. The stored calibration data are specific to the conditions pertaining to the particular apparatus of which the operation is controlled, in contrast to values stored by a manufacturer. If there is a change in these conditions, the method can be repeated. It is not necessary to measure the inlet and outlet pressure or store pressure-dependent data. The method does not require the use of flow meters in the first and second fluid paths to determine the blending fraction. It can be implemented with just a single sensor. This sensor is generally required in any case, where the apparatus includes a feature for automatically controlling the concentration of the components removable by the bypassed fluid treatment apparatus in the fluid provided downstream of the mixing location.

An embodiment includes at least one of:

determining and storing the calibration data for each of multiple reference settings and,
for at least one reference setting, determining and storing calibration data for each of multiple changes in setting relative to the reference setting.

When determining and storing the calibration data for each of multiple reference settings, the actual change in blending fraction associated with a change in setting by a certain amount, say 5 %, is stored for each of multiple reference settings. In effect, a map is created, detailing for each of a set of settings within a range or sub-range, what the actual change in blending fraction is, when the setting is changed by a certain amount or by certain amounts. Where there is one reference setting, say zero, each change in setting with which a stored value is associated corresponds to a point along a range or sub-range. In effect, assuming the reference setting is zero, the actual blending fractions associated with each of multiple settings are stored. Effects of both these embodiments are that it is possible to characterise a device for adjusting the blending fraction that exhibits non-linear behaviour more accurately.

An embodiment of the method further includes:

obtaining a target value of a parameter of the fluid downstream of the mixing location,
determining a new value of the blending fraction required to achieve the target value; and
determining a change in setting of the at least one device corresponding to an adjustment of the blending fraction to the new value using the stored calibration data.

This embodiment thus involves controlling a parameter of the fluid by adjusting the blending fraction. Accuracy is improved because the relation between the setting of the device for adjusting the blending fraction and the actual blending fraction is available in a more exact form. Control can be implemented without the use of multiple flow meters. The device for adjusting the blending fraction need not be manufactured to such high specifications. It can even exhibit behaviour dependent to some extent on the pressure differential across the fluid treatment apparatus. In an embodiment of the method, the fluid treatment apparatus is a liquid treatment apparatus, and the parameter of the liquid depending at least partially on the concentration of at least one of the components remaining in liquid led through the second fluid path to at least a certain higher extent than in liquid led through the first fluid path is one of:

electrical conductivity and
electrical conductivity adjusted for deviations from a reference temperature.

The electrical conductivity of a liquid is a suitable variable for the method, because it depends on the concentration of components in solution in the liquid, in particular also on the ion concentration. The concentration of a certain sub-set of all ion species has an influence on properties of the liquid that commonly need to be controlled, such as hardness (permanent or temporary) and pH. The electrical conductivity is relatively easy to measure.

If the values of the measurement signal are representative of electrical conductivity adjusted for deviations from a reference temperature, then the device carrying out the method need not carry out such an adjustment, implying that it need not be provided with a signal carrying temperature values. The method is more accurate than if temperature deviations were to be disregarded, because the measurement signal is more accurately dependent only on the concentration of dissolved components, rather than being dependent also on the activity coefficients, which vary with temperature.

In an embodiment, the fluid treatment apparatus is a liquid treatment apparatus and the fluid treatment part is a liquid treatment part configured to remove components contributing to at least one of temporary and permanent hardness in water.

Hardness in water is due to magnesium and calcium ions. It comprises two components, namely temporary and permanent hardness. Temporary hardness, or carbonate hardness (the two terms are used interchangeably herein), is caused by dissolved minerals with carbonate and bicarbonate anions, whereas permanent hardness is associated with minerals comprising other anions, such as chloride. The present method is suitable for use with either fluid treatment parts configured to remove components contributing to carbonate hardness or those contributing to permanent hardness. In either case, there will be a change in a parameter of the liquid due to the treatment by the fluid treatment part, in particular a change in electrical conductivity.

In an embodiment, the fluid treatment apparatus is a liquid treatment apparatus and the fluid treatment part is a liquid treatment part including an ion exchange material at least initially in a hydrogen form.

This embodiment is relatively accurate, in particular where the parameter is the electrical conductivity, because there will be a relatively large change in parameter value due to treatment by the fluid treatment part. The hydrogen ions react with carbonate and bicarbonate anions to form water and carbon dioxide, thus reducing the total dissolved mineral content in the treated liquid. In embodiments in which the ion exchange material is loaded with other counterions, e.g. sodium, the change in electrical conductivity is smaller, but still measurable.

In a particular variant, the ion exchange material is a weakly acidic ion exchange resin.

Compared to strongly acidic ion exchange resins, these types of ion exchange resin swell less. As a consequence, they generally have a higher capacity (i.e. are exhausted after a longer period of use).

In an embodiment of the method, the fluid treatment apparatus includes a replaceable fluid cartridge including the fluid treatment part.

This embodiment is suitable for use when the fluid treatment part includes a fluid treatment part that is exhausted over time, in particular one based on sorption, which can then be replaced easily without the need to re-generate the medium on-site. In such fluid treatment cartridges, e.g. cartridges for treating potable water by sorption, in particular ion exchange, the mixing location is often inside the cartridge, making it impracticable to determine the blending ratio by measuring the flow rate in the first and second fluid paths, because the sections thereof that are located within the cartridge are inaccessible. Moreover, the method can make use of existing filter head assemblies, which are the parts to which the cartridges are connected. Insofar as these are fitted with a flow meter, there is generally only one. Adding further ones to the sections of the first and second fluid paths that are within the filter head assemblies is generally impossible due to space constraints, as well as being more expensive. By contrast, adding a sensor downstream of the mixing location is not difficult, because such a sensor can be located downstream of the filter head assembly. Thus, the method is suitable for use with existing, possibly already installed, fluid treatment apparatus.

An embodiment of the method includes:

causing the setting of the at least one device to be adjusted to end points of a range;
determining respective values of the measurement signal pertaining at the end points of the range;
determining the difference between the values of the measurement signal pertaining at the end points of the range; and
calculating the values for determining the change in actual blending fraction associated with a change in setting such as to depend on a ratio of a pre-determined change in blending fraction to the determined difference between the values of the measurement signal.

This addresses the problem that small differentials introduce relatively large errors. The end points can be end points of a relatively large range, meaning that the difference between the values of the measurement signal is also relatively large. As a consequence, the error in the ratio is relatively small. At least one of the end points of the range is pre-determined to correspond to settings at which the blending fraction is known relatively accurately. Thus, the pre-determined change in blending fraction can be used without introducing too large an error. The ratio then represents a proportionality factor adapted to the properties of the untreated fluid as encountered by the particular fluid treatment apparatus. As an example, where the parameter is the electrical conductivity of a liquid such as water and the fluid treatment apparatus is configured to soften the water, the ratio is dependent on the mineral composition of the water to be treated by the fluid treatment apparatus. It quantifies the effect of a change in blending fraction on the electrical conductivity of the mix of softened and untreated water downstream of the mixing location.

A variant of this embodiment includes storing data representative of at least one of the determined difference and the ratio in memory.

This variant allows the method to be carried out in phases so as to characterise the behaviour across an entire range of settings without first having to step through the entire range in detail. Instead, the calibration data can be determined and stored first for a particular sub-range around a first operating point and then later determined and stored for a particular sub-range around a different operating point. Also, the characteristics can be updated without having to adjust the blending fraction to the end points within the range, which is fairly disruptive. For example, where the end points of the range correspond to blending fraction values of zero and one, it is generally not possible to determine the measurement signal values at these end points without disconnecting apparatus downstream of the mixing location. However, assuming that neither the composition of the untreated fluid nor the effectiveness of the fluid treatment part change very much, the parameter of the fluid downstream of the mixing location for these end points will not change very much either. Therefore, the ratio will remain constant, even if the relation between the blending fraction and the settings of the device for adjusting the blending fraction within the range has changed due to e.g. a different pressure differential across the fluid treatment apparatus.

In a further variant, the method includes at least one of:

determining and storing the calibration data for at least one reference setting between the end points; and,
for at least one reference setting, determining and storing calibration data for at least one change in setting relative to the reference setting resulting in a setting between the end points.

In this embodiment, the calibration data between the end points is "filled in" to take account of non-linearities, rather than relying only on calibration data for settings corresponding to the end points of the range.

In a variant, the at least one device for adjusting the blending fraction includes at least one valve and an actuator having a part coupled to at least one valve element, wherein at least one of the end points corresponds to at least one of a limit of a range of movement of the actuator part and a limit determined by a geometry of the valve element.

A reason for determining and storing calibration data for a fluid treatment apparatus including such a device is that the exact positions of the valve element for each position of the actuator are not known. Even if they are known, the proportion of all fluid flowing through the second fluid path is not dependent only on the position of the valve element in many cases. Furthermore, there may be some play between the actuator and the valve element. However, end points corresponding to a fully closed and a fully opened valve, which also correspond to end points of the range of movement of the actuator part, are relatively well-defined. They are also associated with a relatively well-defined blending fraction (often zero and one). This is particularly the case for the fully closed position, in which the valve element contacts a valve seat. At the other end of the range of movement, there may be a point beyond which a passage through a valve no longer widens, even if the actuator moves the valve element beyond this point.

A variant includes causing at least one change in setting from the setting between the end points to obtain the calibration data.

This variant involves obtaining calibration data around an operating point within the wider range defined by the end point.

In a particular variant, the setting between the end points is calculated on the basis of a value of the blending fraction determined to be required to achieve a target value of a parameter of the fluid downstream of the mixing location.

Thus, in this variant, control of a property of the fluid downstream of the mixing location is combined with the determination of the calibration data. The settings are adjusted to the end points once. Then, the value of the blending fraction required to achieve the target value is determined, and the settings of the device for adjusting the blending fraction are adjusted to the appropriate working point. Calibration data is determined and stored around this working point. As a consequence, the fluid treatment apparatus can start to supply a mix of treated and untreated fluid to downstream appliances earlier. Although the mix will have sub-optimal properties during the phase in which calibration data around the working point are determined and stored, the deviations from the optimum will generally be minor. Subsequently, control of the property of the mix of treated and untreated fluid is improved with the aid of the calibration data. The process can be repeated if a large deviation to a new working point is determined to be required.

In another variant, the fluid treatment apparatus includes a replaceable fluid treatment cartridge including the fluid treatment part, and the at least one device is caused to adjust the settings to respective end points of a range upon placement of the fluid treatment cartridge in the fluid treatment apparatus.

The fluid treatment cartridge includes one or more exhaustible or expendable liquid treatment media or agents. The replacement of the fluid treatment cartridge is an event that already interrupts the normal operation of the fluid treatment apparatus, just like the adjustment to the end points of the range. In one implementation of this variant, downstream appliances using the mix of treated and untreated fluid supplied by the fluid treatment apparatus are therefore disconnected to allow for the replacement of the fluid treatment cartridge and a phase in which measurement signal values are obtained whilst the settings of the device for adjusting the blending fraction are at end points of a range of possible settings (with the appliances still disconnected). In another embodiment, at least one agent is present in the fluid treatment cartridge in a quantity sufficient to neutralise an effect of the removal of components by the fluid treatment part through release of the at least one agent into the fluid during the determination of the calibration data. In an embodiment, for example, the fluid treatment part includes an ion exchange material at least initially in the hydrogen form and the agents are buffering agents to neutralise the pH-lowering effect of the treatment by the ion exchange material. The buffering agents are depleted before the ion exchange material becomes exhausted. Thus, to allow the treated fluid to be supplied to appliances without damaging them, at least the steps of causing the setting of the at least one device to be adjusted to end points of a range and determining respective values of the measurement signal pertaining at the end points of the range are carried out before the quantity of the at least one agent is depleted. A further effect of causing the settings to be adjusted to respective end points of a range upon placement of the fluid treatment cartridge in the fluid treatment apparatus is to take account of possible changes in flow resistance of the first and second fluid paths due to a change of cartridge, since at least the first fluid paths runs through the fluid treatment part.

According to another aspect, the method of determining a measure of a concentration of components removable from fluid by a fluid treatment part of a fluid treatment apparatus according to the invention includes carrying out a method of adapting a system for controlling operation of the fluid treatment apparatus according to the invention, wherein determining values of the measure of the concentration of components removable from the fluid includes determining a difference between a value of the parameter at a first ratio of fluid led through the first fluid path to fluid led through the second fluid path and a value of the parameter at a different ratio of fluid led through the first fluid path to fluid led through the second fluid path, and wherein a value of the measure of the concentration of components is calculated using at least one value of the blending fraction obtained on the basis of the stored calibration data and a setting of the at least one device for adjusting the blending fraction.

The ratios may have any value between and including zero and one. The ratios are known and, if not zero or one, used in the determination of the measure.

An ideal fluid treatment part will completely remove certain components from fluid flowing through it. From the difference between the value of the parameter at the first ratio and the value of the parameter at the second ratio, the change in value of the parameter due to the removal of all of these components can be separated out, provided the ratios associated with the parameter values are known. If the measurement signal from the sensor downstream of the mixing location is used to obtain at least one of the parameter values, then knowledge of the blending fraction is equivalent to knowledge of the ratio and required to separate out the effect due to the removal of the components of interest by the fluid treatment part. An efficient way of determining the actual blending fraction is to derive it from the settings of the device for adjusting the blending fraction, but this can only be done if the relation between the settings and the actual blending fraction is known sufficiently accurately, as in the present method.

In an embodiment, the values of the parameter at the first and second ratios are obtained from at least one of the at least one sensors that is located downstream of the mixing location and by causing the blending fraction to be adjusted.

In this embodiment, both of the parameter values at different respective ratios are obtained from the downstream sensor or sensors, so that upstream sensors are not required. In particular, the method can be implemented with a single downstream sensor, which makes implementation of the method relatively cheap. Compared to using an upstream and a downstream sensor, a further effect is that differing degrees of sensor drift need not be taken into account. This is especially useful if the components removable by the fluid treatment part are liable to have a negative impact on the sensors. In that case, because the fluid to which the sensor is exposed is at least partially treated to remove such components, the useful life of the sensor is also relatively long.

In a particular variant, determining a value of the measure of the concentration of components removable by the fluid treatment part includes:

> causing an adjustment of the blending fraction from a first value to a second value;
> obtaining values of the parameter at the first and second ratios; and
> dividing the difference between values of the parameter by a difference between the first and second value of the blending fraction.

This method can be implemented by causing relatively small adjustments of the blending fraction to be made. Consequently, the first and second values of the blending fraction differ only by a small amount. To obtain an accurate value of the measure, the first and second values of the blending fraction should therefore be relatively accurate and free of errors. The present method allows this to be achieved even using the settings of the device for adjusting the blending fraction as the basis for determining the actual blending fraction.

According to another aspect, the system according to the invention is characterised in that the system is configured to obtain values of the parameter before and after the change from at least one of the at least one sensors that is located downstream of the mixing location in order to determine the data, thereby making possible to measure the effect of a change in setting of the device.

The system is thus configured to be suitable for carrying out a method of the invention. It is able to set the blending fraction relatively accurately on the basis of only the settings of the device for adjusting the blending fraction, without requiring additional data like the volumetric rates of flow through the first and second fluid paths.

In an embodiment, the system is configured to carry out a method according to the invention.

According to another aspect of the invention, there is provided a computer program product including a set of instruction capable, when incorporated in a machine-readable medium, of causing a system having information processing capabilities to carry out a method according to the invention.

The invention will be explained in further detail with reference to the accompanying drawings, in which:

Fig. 1 is a schematic diagram of a water treatment apparatus including a system for controlling its operation;
Fig. 2 is a schematic cross-sectional view of a variable-ratio flow divider for use in an apparatus as illustrated in Fig. 1;
Fig. 3 is a schematic diagram of a variant of the water treatment apparatus of Fig. 1 including a fluid treatment device in the form of a replaceable cartridge;
Fig. 4 is a flow chart illustrating a first method of adapting the system for controlling the operation of the fluid treatment apparatus of Fig. 1 or 3 by obtaining data relating changes in settings of a device for adjusting a blending fraction to actual changes in the blending fraction;
Fig. 5 is a flow chart illustrating a second method of adapting the system for controlling the operation of the fluid treatment apparatus of Fig. 1 or 3 by obtaining data relating changes in settings of a device for adjusting a blending fraction to actual changes in the blending fraction;
Figs. 6A and 6B form a flow chart illustrating a third method of adapting the system for controlling the operation of the fluid treatment apparatus of Fig. 1 or 3 by obtaining data relating changes in settings of a device for adjusting a blending fraction to actual changes in the blending fraction;
Fig. 7 is a flow chart illustrating a method of determining the temporary hardness of water to be treated by the fluid apparatus of Fig. 1 or 3;
Fig. 8 is a schematic diagram of a third fluid treatment apparatus including a system for controlling its operation that can be adapted using one of the methods of Figs. 4-6; and
Fig. 9 is a flow chart illustrating a method of determining the temporary hardness of water to be treated by the fluid treatment apparatus of Fig. 8.

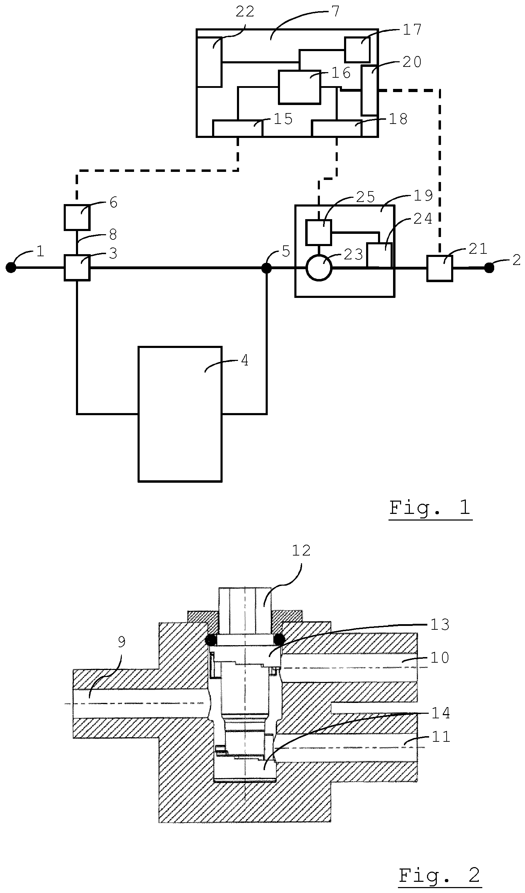

A system for softening water (Fig. 1) as an example of a liquid treatment system includes an inlet 1 for connection to a supply of untreated water. The supply of water can be the mains water supply, for example. The system includes an outlet 2 for connection to an appliance (not shown) or a conduit of a distribution system leading to at least one appliance, in order to supply water with an appropriate hardness level to the appliance or appliances.

The untreated water entering the system through the inlet 1 is led to a variable-ratio flow divider 3, from where first and second fluid paths go separate ways. The first fluid path passes through a liquid treatment part 4 configured to remove minerals contributing to temporary hardness (also referred to as carbonate hardness) to at least a certain extent from water led through it.

The liquid treatment part 4 includes a bed of at least one liquid treatment medium. The liquid treatment medium includes at least one type of ion exchange resin, including at least a cation exchange resin. As an example, the cation exchange resin is at least initially, i.e. when use thereof commences, in the hydrogen form. The cation exchange resin may be of the weakly acidic type. At least initially, the liquid treatment medium is effective to remove all temporary hardness from the water passing through it.

Calcium and magnesium ions are removed from water in exchange for hydrogen ions. The hydrogen ions react with carbonate and hydrogen carbonate ions, in the latter case forming water and carbon dioxide. As a result, the total ion concentration is reduced, causing a change in the electrical conductivity of the water led through the liquid treatment part 4. The pH of the water is also reduced. To counter this reduction in pH, at least initially, the liquid treatment part 4 may further include buffering agents to give the treated water a stable pH value within a certain range. The lower bound of the range may be a value between 5 and 7, for example. The upper bound of the range may be a value between 7 and 9, for example. In a particular example, buffering is achieved by means of a cation ex-exchange resin at least partially loaded with potassium.

The second fluid path bypasses the liquid treatment part 4, such that components contributing to temporary hardness and removable by the liquid treatment part 4 remain in liquid led through the second fluid path to at least a certain higher extent than in liquid led through the first fluid path. In the system illustrated in Fig. 1, the water led through the second fluid path is not treated at all. In other embodiments, it is treated differently, e.g. to remove pathogens or organic compounds from the water.

The first and second fluid paths join at a mixing location 5 such that water led through the liquid treatment part 4 mixes with untreated water. As a result, even though the liquid treatment part 4 is configured to remove components contributing to temporary hardness to a fixed, or at least very slowly decreasing, extent, it is still possible to provide water with any desired temporary hardness level within a relatively wide range up to the hardness level of the untreated water received at the inlet 1.

The fraction of the total volume of water passing through the outlet 2 per unit of time that has been led through the second fluid path is referred to as the blending fraction x. Its value is determined by the settings of the variable-ratio flow divider 3.

The variable-ratio flow divider 3 can be adjusted to set the blending fraction x by means of an electric motor 6, e.g. a stepper motor or servo motor. The motor 6 is controlled by a control device 7. An axle 8 of the motor 6 is coupled to a movable valve element of the variable-ratio flow divider 3. The coupling need not be direct, but may be via a gear mechanism (not shown). The rotational position of the axle 8 is known, e.g. because the motor is a servo motor or because a sensor (not shown) is used to determine the rotational position of the axle 8 in a form of closed-loop control.

The variable-ratio flow divider 3 includes two valves, the valve element being common to both valves and is for example of the type described more fully in WO 2009/101188 A1. Fig. 2 is a schematic cross-section of a part of such a flow divider. It includes an inlet channel 9 and two outlet channels 10,11. A rotatable valve element 12 is suitable for coupling to the axle 8 of the electric motor 6. Cross-section control parts 13,14 are provided with a stepped profile, each step corresponding to a particular cross-section of the opening into the upper or lower outlet channel 10,11, respectively. Thus, the rotational position of the rotatable valve element 12 determines the blending fraction x when the upper and lower outlet channels 10,11 form the first sections of the first and second fluid paths, respectively. There is one limit to the range of movement of the rotatable valve element 12 corresponding to a value of the blending fraction x of exactly zero. There may be an upper limit imposed by the geometry of the stepped profiles of the cross-section control parts 13,14 and/or the range of movement of the rotatable valve element 12. The upper limit may be a value lower than 100 %, e.g. 70 %.

In practice, it is not possible to predict precisely what value the blending fraction x will take for any particular rotational position of the axle 8, except possibly positions at the end of a range of movement of the latter. The exact value of the blending fraction x depends on the pressure difference between the inlet 1 and the outlet 2 (Fig. 1), offsets of the positions of the valve elements coupled to the axle 8, such as of the valve element 12 in the example of Fig. 2, and the dimensions of various parts. For this reason, the control device 7 is arranged to obtain and store calibration data, as will be explained.

The control device 7 includes an interface 15 to the electric motor 6, which includes an interface to any sensors required to determine the position of the axle 8, e.g. as part of a closed-loop control system for setting this position. The control device 7 is further provided with a data processing unit 16 and memory 17, an interface 18 to a sensor device 19 and an interface 20 to a flow meter 21. The control device 7 also includes a further interface 22. The further interface 22 includes at least one of a user interface and a data exchange in-interface, the former for receiving user input and/or providing output in a form perceptible to a user, the latter for exchanging data with an external device. This external device can be an appliance arranged to receive water provided at the outlet 2.

The further interface 22 is configured to obtain data representative of a target value of the temporary hardness of the water to be provided at the outlet 2. This data may be as simple as an indication of the type of appliance for which the water is intended, in which case the control device 7 uses stored data to determine the exact target value. The further interface 22 can also be used to provide at least one of data representative of the actual temporary hardness of the water downstream of the mixing location 5 and/or of the water received at the inlet 1, data indicating the level of exhaustion of the liquid treatment medium in the liquid treatment part 4 and data indicating that a certain level of exhaustion has been reached.

The sensor device 19 includes an electrical conductivity sensor 23 arranged to measure the electrical conductivity of the water downstream of the mixing location 5.

The electrical conductivity of water is dependent on the concentration of dissolved ions of all species, not just those contributing to hardness or that fraction of those species contributing to hardness that contributes to temporary hardness. Thus, for example, water may contain dissolved calcium chloride, of which the calcium ions do not contribute to temporary hardness, but do contribute to permanent hardness. Moreover, certain ion species do not contribute to hardness at all, but their concentration partly determines the electrical conductivity of the water. The control device 7 is programmed to determine the temporary hardness of the water received at the inlet 1 on the basis of measurement values received from the sensor device 19. It is also programmed to use these measurement values to obtain the calibration data enabling it to relate settings of the variable-ratio flow divider 3 to values of the blending fraction and vice versa.

In the illustrated embodiment, the sensor device 19 includes a temperature sensor 24 and a data processor 25 for converting electrical conductivity values from the electrical conductivity sensor 23 into values that would have been obtained if the water had been at a certain pre-determined reference value, e.g. 25°C. These corrected temperature values are provided to the control device 7 and are representative of a parameter of the water downstream of the mixing location 5, namely the temperature-adjusted electrical conductivity. The correction in dependence on deviations from a reference temperature takes account of the fact that the electrical conductivity for a given concentration varies with temperature. Thus, the values of the signal are already directly related to the concentration of dissolved minerals. It is not necessary to provide a temperature signal to the control device 7, saving on connectors and leads and reducing the potential for malfunctioning.

In an alternative embodiment, it is not necessary to process digital values representative of the electrical conductivity in the sensor device 19. Instead, an electrical component exhibiting temperature-dependent behaviour is included in an electrical circuit further comprising the conductivity sensor 23, so that a temperature-adjusted analogue conductivity signal is sampled and discretised to obtain values that are passed on to the control device 7. Devices comprising such circuit arrangements are generally available and therefore not described in more detail here.

In the following, the term electrical conductivity is used as a short-hand for the electrical conductivity or the temperature-adjusted electrical conductivity, in order to explain the principles underlying the various data processing operations to be described. The difference merely affects the accuracy of the outcomes of these data processing operations. Depending on the accuracy demanded, one or the other can be used.

The electrical conductivity of the water at the location of the sensor device 19, i.e. downstream of the mixing location 5, is dependent on the electrical conductivity of the untreated water, the blending fraction $x$ and the electrical conductivity of the water directly downstream of the liquid treat-treatment part 4 but upstream of the mixing location 5. Let the electrical conductivity of the untreated water be $s_0$ and the electrical conductivity of the water between the liquid treatment part 4 and the mixing location 5 be $s_1$. Assuming that no liquid treatment affecting the electrical conductivity of the liquid takes place in the second fluid path, the difference $\Delta s = s_0 - s_1$ is due to the removal of components contributing to temporary hardness from the water led through the liquid treatment part 4. Where the liquid treatment part 4 is 100 % effective in removing these components, this difference is directly convertible into a measure of the carbonate hardness. Where it is not, or the second fluid path also removes components contributing to temporary hardness, but to a lesser extent, multiplying this difference $\Delta s$ by a multiplication factor representing the difference in effectiveness between the liquid treatment part 4 and any liquid treatment part in the second fluid path will yield a value that can be directly converted into a measure of the temporary hardness of the untreated water. Here, it is assumed for simplicity that the liquid treatment part 4 is 100 % effective and that the second fluid path contains no treatment parts resulting in a net change in electrical conductivity.

It would be possible to obtain the value $s_1$ of the electrical conductivity of the water between the liquid treatment part 4 and the mixing location 5 and the value $s_0$ of the electrical conductivity by direct measurement, by setting the blending fraction $x$ to zero and one respectively. This is fairly disruptive, because rather acid (and thus corrosive) and possibly quite hard water would be supplied at the outlet 2. Instead, consecutive measurements by the sensor device 19 at different respective values of the blending fraction $x$ can be used, with the difference between the blending fraction values being quite small.

Let the value of the electrical conductivity at the mixing location 5 and thus also at the location of the sensor device 19 be $s(x)$. For a given value of the blending fraction x, $s(x)$ can be written as follows:

$$s(x) = x \cdot s_0 + (1 - x) \cdot s_1 = (s_0 - s_1) \cdot x + s_1 = \Delta s \cdot x + s_1 \qquad (1)$$

An approximation of the derivative s'(x) of the electrical conductivity with respect to the blending fraction gives a fairly good estimate of the change $\Delta s$ in electrical conductivity due to the treatment by the liquid treatment part 4. For example, by changing the blending fraction to different consecutive values around a value $x_0$ representing an operating point, the change in electrical conductivity due to the treatment by the liquid treatment part 4 can be obtained:

$$\Delta s = \frac{s\left(x_0 + \Delta x / 2\right) - s\left(x_0 - \Delta x / 2\right)}{\Delta x} \, . \qquad (2)$$

This calculation requires knowledge of the blending fraction $x$ or change $\Delta x$ in blending fraction. Given that there is only one flow meter 21, the control device 7 is configured to use calibration data stored in memory 17 to relate the position of the axle 8 to the blending fraction $x$.

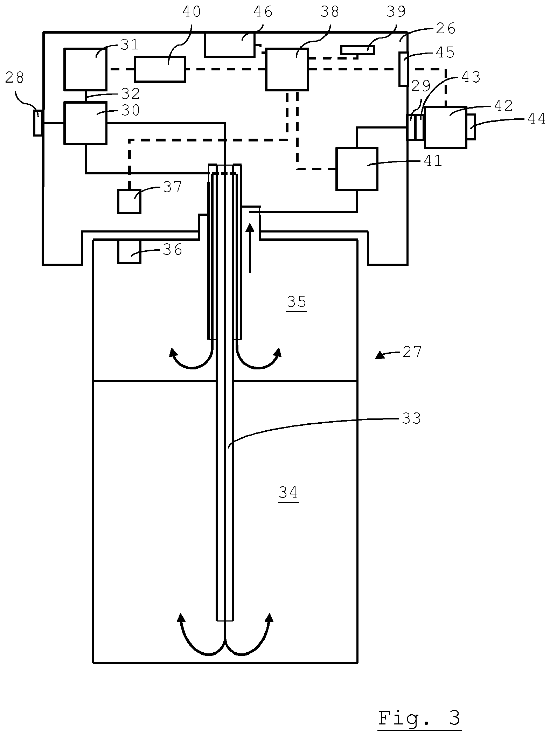

Before proceeding to a discussion of how the calibration data is obtained, a variant of the first liquid treatment apparatus will be discussed. This second liquid treatment apparatus (Fig. 3) includes a filter head 26 and a replaceable liquid treatment cartridge 27. Mechanical interfaces (not shown in detail) enable the latter to be mechanically connected to the filter head 26 in an essentially fluid-tight manner.

The filter head 26 includes an inlet connector 28 for connection to a supply line for supplying untreated water.

This can be the mains water supply, for example. The filter head 26 further includes an outlet connector 29 for connection to a conduit (not shown) for delivering treated water to one or more appliances (not shown).

A first fraction of the untreated water entering the filter head 26 passes through the liquid treatment cartridge 27 along a first fluid path. A second fraction corresponds to the blending fraction. As in the first liquid treatment apparatus, a variable-ratio flow divider 30 including one or more valves and at least one movable valve element is arranged to split the incoming flow of water into the first and second fractions. The variable-ratio flow divider 30 can be implemented in the shape of the flow divider illustrated in Fig. 2. Again, an electric motor 31, which may be a stepper motor or servo motor, includes an axle 32 coupled to the movable valve element of the variable-ratio flow divider 30 to adjust its setting and thereby adjust the blending fraction $x$. In an embodiment, the coupling is via a gear system.

The first and second fluid paths both pass through the liquid treatment cartridge 27, which has two separate inlets and one outlet, each arranged to be sealingly connected to associated outlets and an inlet, respectively, of the filter head 26 through mechanical connection of the liquid treatment cartridge 27 to the filter head 26. A fall tube 33 is arranged to deliver the fraction of water led along the first fluid path to a first bed 34 of liquid treatment medium. The fraction of water led along the second fluid path is led directly to a second bed 35 of liquid treatment medium arranged downstream, in use, of the first bed 34 of liquid treatment medium. The first fluid path also passes through the second bed 35 of liquid treatment medium, with the consequence that the second bed 35 operates as a mixing location, where the first and second fluid paths join and the respective water fractions mix. This mix of water then leaves the liquid treatment cartridge 27 through its outlet to re-enter the filter head 26.

The first bed 34 of liquid treatment medium includes an ion exchange material, for example in the form of ion exchange resin beads. The ion exchange material is at least initially in the hydrogen form, meaning that it exchanges hydrogen for other cations (principally calcium and magnesium) in the water. The use of a replaceable liquid treatment cartridge 27 allows the ion exchange material to be re-generated off-site using an acid to return it to the hydrogen form. It also allows the use of weakly acidic ion exchange resins, which cannot easily be re-generated on-site for the same reason. When the resin is exhausted, the liquid treatment cartridge 27 is returned to the manufacturer to allow the resin to be re-generated.

The second bed 35 of liquid treatment medium may also include an ion exchange material, even a cation exchange material, but is at least configured to remove components contributing to temporary hardness to a lesser extent than the medium of the first bed 34, if only because the contact time of the liquid led through the second fluid path is shorter. In general, the second bed 35 will not include a cation exchange material, but it may include other types of liquid treatment medium including buffering agents that are given off to stabilise the pH of the treated water at a level within a desired range. Again, the range would typically have a lower bound between 5 and 7. The range may have an upper bound of between 7 and 9. Other types of liquid treatment medium that can be included in the second bed 35 include activated carbon.

In the illustrated embodiment, the liquid treatment cartridge 27 is provided with a machine-readable tag 36. The filter head 26 includes a device 37 for at least reading data from the machine-readable tag 36 of a liquid treatment cartridge 27 mechanically connected to the filter head 26. For ease of construction, data transfer between the tag 36 and the device 37 is contactless. The tag 36 can, for example, be an optically, electrically or electromagnetically readable device, e.g. a bar code or RFID (radio-frequency identification device chip. In an embodiment, the device 37 and tag 36 are configured to allow data to be transferred to and stored in the tag 36.

Data stored in the tag 36 include at least one of an identification of the liquid treatment cartridge 27, in particular a unique identification, e.g. in the form of a serial number, an identification of the type of liquid treatment medium or media of the first bed 34, an identification of the type of liquid treatment medium or media of the second bed 35, data identifying the type of the liquid treatment cartridge 27 from among a plurality of types, data representative of the maximum volume of water that can be treated in the first bed 34 before it is exhausted, some other measure of the total initially available capacity of the first bed 34, data representative of a degree of exhaustion of the liquid treatment medium in the liquid treatment cartridge 27 etc. The latter can be updated by writing the data to the tag 36 during use of the liquid treatment cartridge 27.

The filter head 26 further includes a data processing unit 38 and memory 39. An interface 40 allows the data processing unit 38 to control the motor 31, in particular the position of the axle 32, thereby determining a setting of the variable-ratio flow divider 30. A flow meter 41 is arranged to measure at least one of volumetric flow rate and the accumulated volume that has passed through the filter head 26. Since the data processing unit 38 determines the blending fraction $x$ and is able to detect replacement of the liquid treatment cartridge 27, it is also able to calculate the respective volumes of water that have flowed through the first and second beds 34 of liquid treatment medium since placement of the liquid treatment cartridge 27. Moreover, since it calculates the temporary hardness of the untreated water, the data processing unit 38 is also able to calculate a parameter corresponding to an integral of the volumetric flow rate through the first bed 34, weighted by the temporary hardness of the untreated water, over all periods in which water flows through the first bed 34, thus obtaining a measure of the accumulated load placed on the liquid treatment medium in the first bed 34. This corresponds to a measure of the degree of exhaustion, which can be written to the tag 36 at intervals in order to ensure that the liquid treatment cartridge 27 is replaced even if removed from the filter head 26 and re-connected to the same or a different filter head 26 of the same type.

In the system of Fig. 3, a sensor device 42 of similar construction to the sensor device 19 of the first liquid treatment apparatus (Fig. 1) includes a separate housing. It has an inlet connector 43 for connection to the outlet connector 29 of the filter head 26 and an outlet connector 44 for connection to a conduit (not shown) for supplying water with a required degree of temporary hardness to one or more appliances (not shown). The sensor device 42 is arranged to provide a signal representative of one of the electrical conductivity of the mix of water downstream of the mixing location in the second bed 35 and the electrical conductivity adjusted for deviations from a reference temperature of that mix of water. This signal reaches the filter head 26 through an interface 45.

In one embodiment, a temperature sensor and data processor (not shown) are provided for carrying out the adjustment for deviations from the reference temperature as in the embodiment of Fig. 1. As discussed above in relation to the sensor device 19 of the first liquid treatment apparatus (Fig. 1), a single sensor providing an analogue signal representative of the temperature-adjusted electrical conductivity may be used instead.

A further interface 46 includes at least one of a user interface and a data exchange interface, the former for receiving user input and/or providing output in a perceptible form and the latter for exchanging data with an external device, e.g. an appliance connected to the outlet connector 44.

The further interface 46 is used in one embodiment to obtain data representative of a target value of the temporary hardness of the water leaving the liquid treatment apparatus. This data may be as simple as an indication of the type of application for which the water is intended, in which case the data processing unit 38 uses stored data to determine the target value. The further interface 46 can be used to provide at least one of data representative of the actual temporary hardness of the water downstream of the liquid treatment cartridge 27, data representative of the untreated water, data representative of the state in its lifecycle reached by the liquid treatment cartridge and data indicating that a certain stage has been reached, in particular a need to replace the liquid treatment cartridge 27.

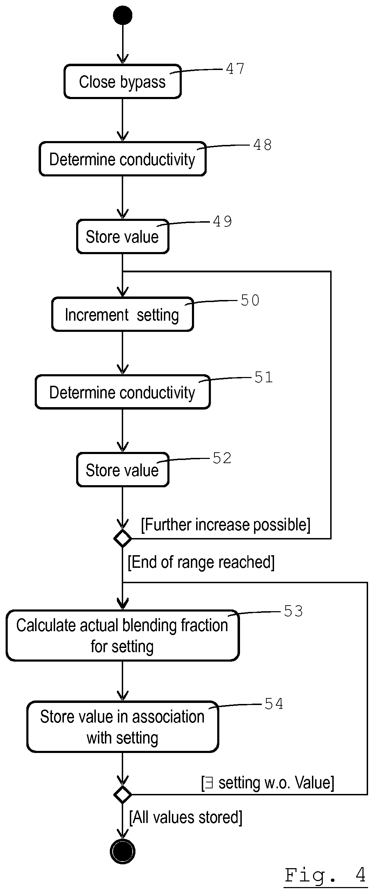

A first method of adjusting the control system formed by the filter head 26 is illustrated in Fig. 4. It is executed in essentially the same way by the control device 7 controlling the operation of the liquid treatment apparatus of Fig. 1. This method is aimed at obtaining calibration data for storage in memory 39, so that the data processing unit 38 can more accurately relate positions of the axle 32 of the motor 31 to values of the blending fraction x.

In a first step 47, the second fluid path is completely closed, so that the blending fraction $x$ has a value of zero. This position corresponds to a first end point of a range of possible settings of the variable-ratio flow divider 30 as dictated by the range of movement of a valve element therein. The axle 32 cannot be moved beyond this limit. Thus, it is absolutely certain that this position corresponds to a blending fraction x of exactly zero. Using the flow meter 41 or an internal timer, the data processing unit 38 waits for long enough to allow the new ratio of water treated by the medium in the first bed 34 to water bypassing the first bed 34 to establish itself in the water in the second bed 35 and the downstream tract up to the sensor device 42, and it then obtains a value of the measurement signal from the sensor device 42 (step 48). This value is stored (step 49).

Then, the setting of the variable-ratio flow divider 30 is incremented (step 50) by a certain amount, designated here as $\Delta\phi$, where $\phi$ represents the adjustable setting, e.g. on a scale of 0 to 1. After a suitable pause, a further value, designated here as $s(\phi)$, of the measurement signal is obtained from the sensor device 42 (step 51) and stored in memory 39 (step 52). For as long as a limit $\phi_{max}$ at the other end of the range of possible settings has not yet been reached, these steps 50,51,52 are repeated.

Thus, for each value of the setting $\phi_i$, i = 0, 1, 2, ... n and n the number of increments, a value $s(\phi_i)$ of the electrical conductivity is obtained.

Then, for each value of the setting $\phi_i$, starting from zero, which can be regarded as a reference value, the actual value of the blending fraction $x(\phi_i)$ for that setting is calculated (step 53) and stored (step 54) in association with that setting in memory 39. The calculation proceeds as follows:

$$x(\phi_i) = \frac{s(\phi_i) - s(\phi_0)}{s(\phi_{max}) - s(\phi_0)} \cdot x_{max} \, , \qquad (3)$$

where $x_{max}$ is the maximum attainable blending fraction (e.g. 1), a pre-determined value stored in memory. $\Phi_{max}$ is the corresponding maximum of the range of possible settings, generally also dictated by a limit to a range of movement of a movable valve element. $\Phi_0$ represents the initial setting, corresponding to a value of the blending fraction value of zero.

The result is therefore, based on a single reference setting $\phi_0$, a calibration data item for each change in setting from $\phi_0$ to a particular value $\phi_i$. Each calibration data item represents a value suitable for determining a change in blending fraction from the blending fraction $x(\phi_0)$ at the reference setting $\phi_0$ to the actual blending fraction $x(\phi_i)$.

As described, the data processing unit 38 causes the setting of the variable-ratio flow divider 30 to be adjusted to the end points $\phi_0,\phi_{max}$ of a range of possible settings $\phi_i$. Values $s(\phi_0),s(\phi_{max})$ of the measurement signal at the end points of the range are determined. A ratio of a pre-determined change $x_{max}$ in blending fraction to the difference $s(\phi_{max})$-$s(\phi_0)$ is used to calculate the values $s(\phi_i)$ at the intermediate setting values $\phi_i$.

On completion of the method of Fig. 4, the data processing unit 38 uses the calibration data in a method of controlling the temporary hardness of the water provided by the liquid treatment apparatus. This method involves obtaining a target value of the temporary hardness of that liquid, determining a new value of the blending fraction $x$ required to achieve the target value and determining a change in setting of the variable-ratio flow divider 30 corresponding to an adjustment of the blending fraction $x$ to the new value using the stored calibration data. The determination of the change in setting may involve an interpolation so as not to be limited to the exact setting values achieved by incrementing the setting (step 50 in Fig. 4).

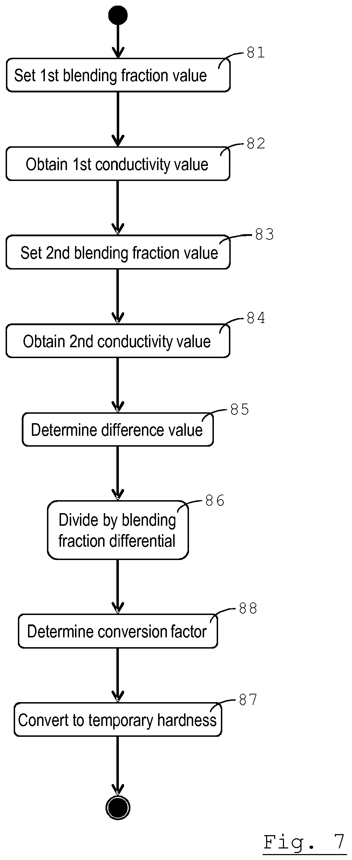

The data processing unit 38 also uses the stored calibration data in a method of determining the temporary hardness of the untreated water supplied to the fluid treatment apparatus along the lines set out above with the aid of Equation (2) and also illustrated in Fig. 7.

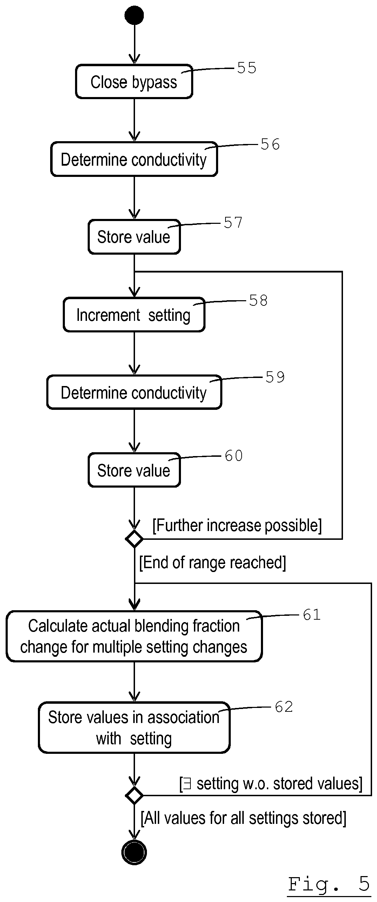

A variant of the method of Fig. 4 is illustrated in Fig. 5.

In a first step 55, the second fluid path is again completely closed, so that the blending fraction $x$ has a value of zero. This position corresponds to a first end point $\phi_0$ of a range of possible settings of the variable-ratio flow divider 30 as dictated by the range of movement of a valve element therein. Thus, it is absolutely certain that this position corresponds to a blending fraction $x$ of exactly zero. Using the flow meter 41 or an internal timer, the data processing unit 38 waits for long enough to allow the new ratio of water treated by the medium in the first bed 34 to water bypassing the first bed 34 to establish itself in the water in the second bed 35 and the downstream tract up to the sensor device 42, and it then obtains a value of the measurement signal from the sensor device 42 (step 56) This value is stored (step 57).

Then, the setting of the variable-ratio flow divider 30 is incremented (step 58) by a certain amount $\Delta\phi$. After a suitable pause, a further value $s(\phi)$ of the measurement signal is obtained from the sensor device 42 (step 59) and stored in memory 39 (step 60). For as long as a limit $\phi_{max}$ at the other end of the range of possible settings has not yet been reached, these steps 58-60 are repeated.

Thus, for each value of the setting $\phi_i$, i = 0,1,2,...,n, and n the number of increments, a value $s(\phi_i)$ of the electrical conductivity is obtained. Thus far, the method of Fig. 5 is the same as the method of Fig. 4.

Then, for each of several values of the setting $\phi_i$, each forming a respective reference value, the actual change in value of the blending fraction is calculated for each of multiple changes in setting (step 61) and stored (step 62) as a set of pairs of values ($\Delta\phi,\Delta x$) in association with that setting $\phi_i$ in memory 39.

The calculation, which is repeated for each reference value $\phi_i$, proceeds as follows:

$$\Delta x_{ij} = \frac{s(\phi_{i+j}) - s(\phi_i)}{s(\phi_{max}) - s(\phi_0)} \cdot x_{max}, j = -i,\ldots 0,\ldots,n-i \; , \qquad (4)$$

where $x_{max}$ is the maximum attainable blending fraction (e.g. one), a pre-determined value stored in memory. $\phi_{max}$ is the corresponding maximum of the range of possible settings, generally also dictated by a limit to a range of movement of a movable valve element. $\phi_0$ represents the initial setting, corresponding to a value of the blending fraction value of zero.

The result is therefore, for each reference setting $\phi_i$, at least one calibration data item $\Delta x_{ij}$, representative of a value for calculating an actual change in blending fraction associated with a change in setting $\phi_j$-$\phi_i$.

Variants are possible. For example, absolute values of the change in blending fraction may be stored in association with absolute values of the change in setting. In another variant, the following equation is used:

$$\Delta x_{ij} = \frac{s(\phi_{i+j}) - s(\phi_{i-j})}{s(\phi_{max}) - s(\phi_0)} \cdot x_{max}, j = 1,2,\ldots,m \; . \qquad (5)$$

Again, a ratio of a pre-determined change $x_{max}$ in blending fraction to the difference $s(\phi_{max})$-$s(\phi_0)$ is used to calculate the values $\Delta x_{ij}$.

On completion of the method of Fig. 5, the data processing unit 38 uses the calibration data in a method of controlling the temporary hardness of the water provided by the liquid treatment apparatus. This method involves obtaining a target value of the temporary hardness of that liquid, determining a change in value of the blending fraction $x$ required to achieve the target value and determining a change in setting of the variable-ratio flow divider 30 corresponding to an adjustment of the blending fraction $x$ to the new value using the stored calibration data.

The data processing unit 38 also uses the stored calibration data in a method of determining the temporary hardness of the untreated water supplied to the fluid treatment apparatus along the lines set out above with the aid of Equation (2) and also illustrated in Fig. 7.

The steps 50-52 in the method of Fig. 4 and the corresponding steps 58-60 of the method of Fig. 5 in which the electrical conductivity data are obtained for each of multiple different settings $\phi_i$ can take quite a while to complete. It is envisaged that they would be carried out once upon placement of a new liquid treatment cartridge 27. In a particular embodiment, the liquid treatment cartridge 27 is configured to release buffering agents during a first, relatively short, stage of its lifecycle. Thus, it is possible to vary the blending fraction $x$ across a wide range without affecting any appliances downstream of the fluid treatment apparatus, which can thus remain connected. The buffering agents are depleted after a relatively small volume of water has passed through the liquid treatment cartridge 27, whereas the liquid treatment medium of the first bed 34 is exhausted after a much larger volume of water has passed through the first bed 34.

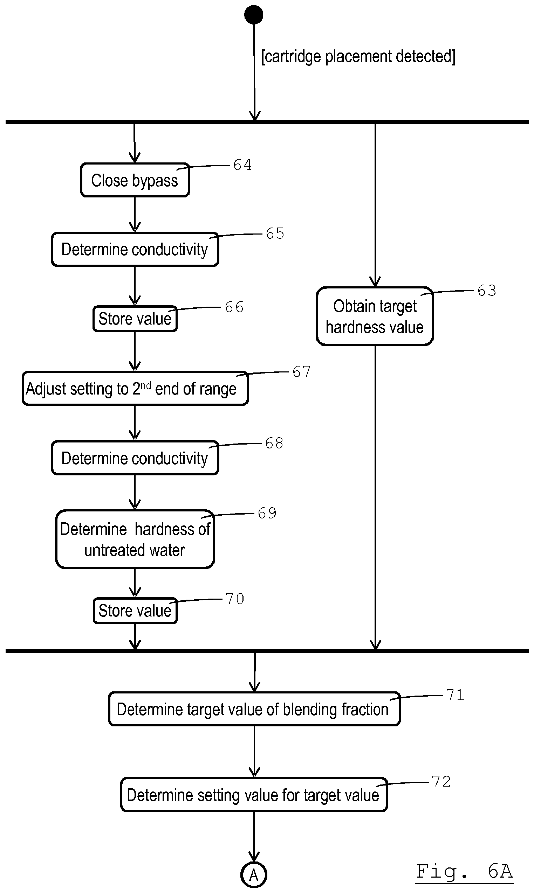

In the method of Figs. 6A-6B, the liquid treatment cartridge 27 is also provided with buffering agents that are released in an initial phase in its lifecycle. This is used to obtain measurement values at end points of the range of settings, but further calibration data are obtained during use, limited to a sub-range of the setting around an operating point.

Thus, upon detecting the placement of a liquid treatment cartridge 27 that is still in an initial phase of its lifecycle, the data processing unit 38 proceeds to obtain a target value of the temporary hardness of the water to be supplied by the fluid treatment apparatus (step 63). This value, or data enabling this value to be determined, is received through the further interface 46.

In parallel, settings of the variable-ratio flow divider 30 are adjusted (step 64) to an end point $\phi_0$ of the range within which they can be adjusted. In this example, the end point $\phi_0$ corresponds to a value of the blending fraction $x$ of zero, and is dictated by a limit to the range of movement of the axle 32. After a suitable volume of water has flowed through the apparatus at this setting, a value $s(\phi_0)$ of the electrical conductivity is obtained (step 65). This value is stored (step 66).

Then (step 67), the settings are adjusted to the opposite end point $\phi_{max}$ of the range, in particular one corresponding to another limit of the range of movement of the axle 32. After a suitable volume of water has flowed through the apparatus at this setting, a value $s(\phi_{max})$ of the electrical conductivity is obtained (step 68). This value is stored (step 69).

After that, at least in the illustrated embodiment, no further values are obtained. Rather, the hardness of the untreated water received by the fluid treatment apparatus is determined (step 70).

In one embodiment, this involves the following calculation:

$$\Delta s \equiv s_0 - s_1 = \frac{s(\phi_{max}) - s(\phi_0)}{x_{max}} \, . \tag{6}$$

Again, $x_{max}$ is the (stored) value of the blending fraction at the maximum setting $\phi_{max}$ of the variable-ratio flow divider. It will be recalled that $\Delta s$ is the change in electrical conductivity due to complete removal of all components contributing to temporary hardness. This value can be converted into a value of a measure of the temporary hardness of the untreated water by dividing by a conversion factor $F$, which may a constant, e.g. $F = 30 \, \mu S/°dH$, where dH stands for deutsche Harte.

Then, a target value of the blending fraction $x$ is determined (step 71) on the basis of the target hardness value and the calculated value of the temporary hardness of the untreated water.

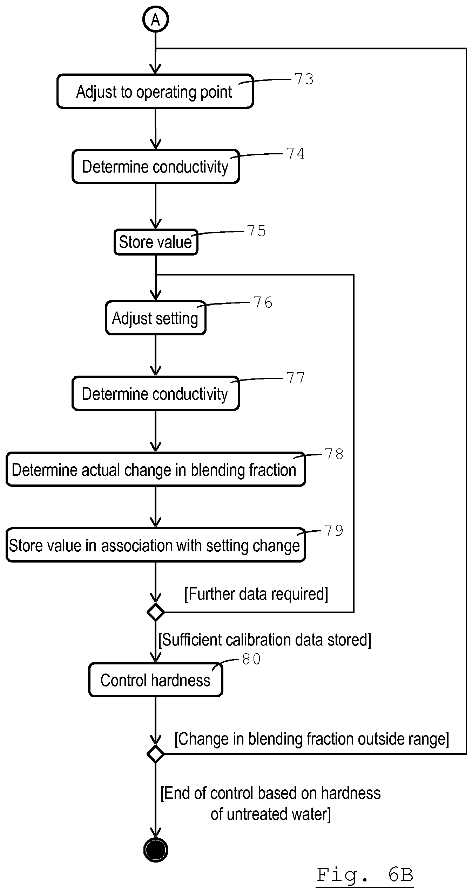

Using a linear interpolation, a value $\phi_{OP}$ of the setting of the variable-ratio flow divider corresponding to the target value of the blending fraction is determined (step 72). This value $\phi_{OP}$ is also referred to herein as an operating point. Calibration data are then assembled for a range of settings around the operating point, which range is a relatively small sub-range of the total range of possible settings, as illustrated in Fig. 6B.

Thus (step 73), the setting is first adjusted to the operating point $\phi_{OP}$. The conductivity $s(\phi_{OP})$ at the operating point $\phi_{OP}$ is determined (step 74) and stored (step 75). Starting from the operating point $\phi_{OP}$, changes $\Delta\phi_i$, i=0, 1,...n are made (step 76) and values $s(\phi_{OP}+\Delta\phi_i)$ of the electrical conductivity at the adjusted setting are obtained (step 77). For each change $\Delta\phi_i$, the actual change in blending fraction $\Delta x_i$ is determined as follows:

$$\Delta x_i = \frac{s(\phi_{OP}+\Delta\phi_i) - s(\phi_{OP})}{s(\phi_{max}) - s(\phi_0)} \cdot x_{max} \, . \tag{7}$$

Calibration data representative of the value pairs $(\Delta\phi_i, \Delta x_i)$ are stored (step 79) in memory 39. These steps 76-79 are repeated until a sufficient amount of calibration data in the sub-range around the operating point has been obtained and stored.

Then (step 80), the temporary hardness is controlled to achieve the target value, but using the calibration data to improve firstly the accuracy with which a blending fraction determined to be required to achieve the target value is set. Secondly, the calibration data are also used to determine the temporary hardness of the untreated water relatively accurately using the method outlined in Fig. 7.

It will be recalled from the discussion above in relation to Equations (1) and (2) that an approximation of the derivative $s'(x)$ of the electrical conductivity with respect to the blending fraction gives a relatively good estimate of the change $\Delta s$ in electrical conductivity due to the removal of all components contributing to temporary hardness from the untreated water. Thus, an approximation of this derivative is calculated.

Starting from a current value $x_0$ of the blending fraction, which now need no longer correspond exactly to that of the operating point, but lies in a range around the operating point covered by the calibration data, the blending fraction is adjusted to a first value $x_1=x_0+\Delta x/2$ in a first step 81. The calibration data is used to ensure that the correct setting of the variable-ratio flow divider 30 for obtaining the first value $x_1$ is used. After a delay long enough to ensure that a volume of water allowing the new ratio of water treated by the medium in the first bed 34 to water bypassing the first bed 34 to have established itself in the water in the second bed 35 and the downstream tract up to the sensor device 42, a first value $s(x_1)$ of the electrical conductivity is obtained (step 82).

Then (step 83), the blending fraction $x$ is set to a second value $x_2=x_0-\Delta x/2$, different from the first value. Again, the calibration data is used to ensure that the correct setting of the variable-ratio flow divider 30 for obtaining the second value $x_2$ is used. After a further delay long enough to ensure that a volume of water allowing the new ratio of water treated by the medium in the first bed 34 to water bypassing the first bed 34 to have established itself in the water in the second bed 35 and the downstream tract up to the sensor device 42, a second value $s(x_2)$ of the electrical conductivity is obtained (step 84).

Next, the difference $s(x_1)-s(x_2)$ between the current and the preceding value of the electrical conductivity is calculated (step 85) and divided (step 86) by the change $x_1-x_2$ in blending fraction. The result is divided by a conversion factor $F$ (step 87). In the illustrated embodiment, rather than using a fixed value for the factor $F$, it is first determined (step 88) on the basis of at least one of the value $s(x_1)$ of the electrical conductivity at the first value $x_1$ of the blending fraction and the value $s(x_2)$ of the electrical conductivity at the second value $x_2$ of the blending fraction. In one embodiment, it is determined on the basis of an average of the two. In a particular version of this embodiment, a conversion factor $F$ decreasing linearly with the average of the two values $s(x_1),s(x_2)$ is used, as described more fully in co-pending international patent application No. PCT/EP2013/064112 filed on 4 July 2013 by the same applicant as that of the present application. It has been found empirically and by modelling the dependency of the electrical conductivity on the concentration of dissolved minerals using the Debye-Huckel-Onsager theory that such a variable conversion factor improves the accuracy of the determination of the temporary hardness.

Returning briefly to Fig. 6B, it may happen that the temporary hardness of the untreated water is such as to require a change in blending fraction taking the setting of the variable-ratio flow divider 30 out of the sub-range around the operating point $\phi_{OP}$ for which calibration data are available. In that case, a new operating point is determined and the steps 76-79 for obtaining calibration data are repeated. However, the steps 64-68 of obtaining electrical conductivity values at the end points of the range of possible settings of the variable-ratio flow divider 30 are not repeated, because at least one of the values $s(\phi_0)$, $s(\phi_{max})$ of the electrical conductivity pertaining at the end points $\phi_0,\phi_{max}$ of the range, the difference between these two electrical conductivity values $s(\phi_0),s(\phi_{max})$ and the ratio of this difference to the predetermined change $x_{max}$ in blending fraction associated with the change in settings from one end point $\phi_0$ to the other end point $\phi_{max}$ has been retained in memory 39. Thus, the process of obtaining new calibration data can be carried out without having to disconnect appliances supplied with water by the liquid treatment apparatus, even if any buffering agents have long since been depleted at this stage.

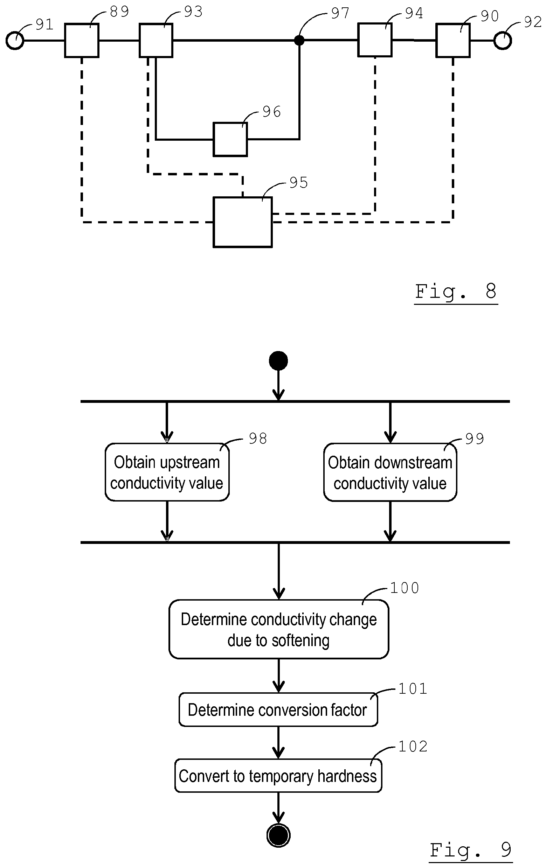

Although the methods of Figs. 4-6 require only one sensor device 19,42, they can usefully be applied in a third type of liquid treatment apparatus having two sensor devices 89,90 as illustrated in Fig. 8. These sensor devices 89,90 are of the same construction as those of Fig. 1 and 3.

The liquid treatment apparatus shown in very simplified form in Fig. 8 further includes an inlet 91 and an outlet 92, a variable-ratio flow divider 93 operated by an electric motor (shown as a single unit in Fig. 8), a flow meter 94 and a control device 95. A first fluid path runs from the variable-ratio flow divider 93 through a liquid treatment part 96 to a mixing location 97, where it joins a second fluid path running straight from the variable-ratio flow divider 93 to the mixing location, such that water led through the first and second fluid paths is mixed.

A variant of the liquid treatment apparatus of Fig. 8 in which the first and second fluid path both extend through a replaceable liquid treatment cartridge will be readily conceived of in the light of the discussion of the first and second liquid treatment apparatuses of Figs. 1 and 3 above.

The upstream sensor device 89 is situated upstream of the liquid treatment part 96. In the illustrated embodiment, it is even situated upstream of the variable-ratio flow divider 93. This has the effect that it can be external to a filter head in the variant of the third liquid treatment apparatus including a replaceable liquid treatment cartridge.

The downstream sensor device 90 has to be located downstream of the mixing location 97 in order to use it to obtain calibration data using any one of the methods of Figs. 4-6.

Rather than use the method of Fig. 7 to determine the temporary hardness of the untreated water, a method as shown schematically in Fig. 9 is used. In this method, a value of the electrical conductivity $s_{upstream}$ and a value of the electrical conductivity $s_{downstream}$ are obtained from the two sensor devices 89,90 (steps 98,99). The change in electrical conductivity $\Delta s \equiv s_0\text{-}s_1$ due to the removal of the components contributing to temporary hardness by the liquid treatment part 96 is then determined (step 100) as follows:

$$\Delta s = \frac{s_{upstream} - s_{downstream}}{1 - x} \; . \qquad (8)$$

The correct value of the blending fraction x in Equation (8) is obtained using the settings of the variable-ratio flow divider 93 and the stored calibration data obtained using any one of the methods of Figs. 4-6.

After obtaining an appropriate value of the conversion factor $F$ in a step 101 corresponding to the similarly-designated step 88 in the method of Fig. 7, the result of Equation (8) is converted (step 102) to a value of the measure of the temporary hardness of the untreated water.

This value is then used in a control algorithm to set the variable-ratio flow divider 93 such as to achieve a blending fraction x suitable for obtaining a target value of the temporary hardness of the water at the outlet 92. The calibration data is used for this as well.

The invention is not limited to the embodiments described above, which may be varied within the scope of the accompanying claims. For example, instead of using a variable-ratio flow divider of the type illustrated in Fig. 2, a device having two inlet channels and one outlet channel, connected to the inlet channels via a mixing location can be used. In such a device, a movable, e.g. rotatable, valve element is used to adjust the cross-sections of the respective openings of the inlet channels into the mixing location. Alternatively, separate valves in the first and second fluid paths can be adjusted to set the blending ratio, each being adjusted by its own actuator.

LIST OF REFERENCE NUMERALS

1       - Inlet

2       - Outlet

3       - Variable-ratio flow divider

4       - Liquid treatment part

5       - Mixing location

6       - Motor

7       - Control device

8       - Axle

9       - Inlet channel

10      - Upper outlet channel

11      - Lower outlet channel

12      - Rotatable valve element

13      - Upper control part

14      - Lower control part

15      - Interface to motor

16      - Data processing unit

17      - Memory

18      - Interface to sensor device

19      - Sensor device

20      - Interface to flow meter

21      - Flow meter

22      - Further interface

23      - Electrical conductivity sensor

24      - Temperature sensor

25      - Data processor

26      - Filter head

27      - Liquid treatment cartridge

28      - Inlet connector

29      - Outlet connector

30      - Variable-ratio flow divider

31      - Motor

32      - Axle

33      - Fall tube

34      - First bed of liquid treatment medium

35      - Second bed of liquid treatment medium

36      - Machine-readable tag

37      - Device for reading and writing data from and to a tag

38      - Data processing unit

39      - Memory

40      - Motor interface

41      - Flow meter

42      - Sensor device

43      - Inlet connector of sensor device

44    - Outlet connector of sensor device

45    - Interface to sensor

46    - Further interface

47    - Step (close bypass)

48    - Step (determine conductivity)

49    - Step (store value)

50    - Step (increment setting)

51    - Step (determine conductivity)

52    - Step (store value)

53    - Step (calculate actual blending fraction for setting)

54    - Step (store value in association with setting)

55    - Step (close bypass)

56    - Step (determine conductivity)

57    - Step (store value)

58    - Step (increment setting)

59    - Step (determine conductivity)

60    - Step (store value)

61    - Step (calculate actual blending fraction change for multiple setting changes)

62    - Step (store values in association with setting)

63    - Step (obtain target hardness value)

64    - Step (close bypass)

65    - Step (determine conductivity)

66    - Step (store value)

67    - Step (adjust setting to $2^{nd}$ end of range)

68    - Step (determine conductivity)

69    - Step (store value)

70    - Step (determine hardness of untreated water)

71    - Step (determine target value of blending fraction)

72    - Step (determine setting value for target value)

73 - Step (adjust to operating point)

74 - Step (determine conductivity)

75 - Step (store value)

76 - Step (adjust setting)

77 - Step (determine conductivity)

78 - Step (determine actual change in blending fraction)

79 - Step (store value in association with setting)

80 - Step (control hardness)

81 - Step (set first blending fraction value)

82 - Step (obtain first conductivity value)

84 - Step (set second blending fraction value)

83 - Step (obtain second conductivity value)

85 - Step (determine difference value)

86 - Step (divide by blending fraction differential)

87 - Step (convert to temporary hardness)

88 - Step (determine conversion factor)

89 - Upstream sensor device

90 - Downstream sensor device

91 - Inlet

92 - Outlet

93 - Variable-ratio flow divider

94 - Flow meter

95 - Control device

96 - Liquid treatment part

97 - Mixing location

98 - Step (obtain upstream conductivity value)

99 - Step (obtain downstream conductivity value)

100 - Step (determine conductivity change due to softening)

101 - Step (determine conversion factor)

102    - Step (convert to temporary hardness)

**Claims**

**1.** Method of adapting a system (7;26;95) for controlling operation of a fluid treatment apparatus, the fluid treatment apparatus including:

at least one first fluid path and at least one second fluid path,
each first fluid path leading through a fluid treatment part (4;34;96) for treating fluid to remove to at least some extent at least one component from fluid led through the fluid treatment part (4;34;96),
each second fluid path bypassing at least one of the fluid treatment parts (4;34;96), such that at least one component removable by the fluid treatment part (4;34;96) remains in fluid led through the second fluid path to at least a certain higher extent than in fluid led through a first fluid path;
a mixing location (5;35;97), where the first and second fluid paths join to mix fluid led through the first and second fluid paths;
at least one device (3,6;30,31;93) for adjusting a blending fraction corresponding to a proportion of fluid led through the second fluid path in fluid downstream of the mixing location (5;35;97); and
at least one sensor (19;42;90) for obtaining a measurement signal, values of which are representative of a parameter of the fluid depending partially on a concentration of at least one of the components remaining in fluid led through the second fluid path to at least a certain higher extent, the method including:

for each of at least one reference setting of the at least one device for adjusting the blending fraction:

determining and storing for each of at least one change in setting relative to the reference setting calibration data representative of a respective value for determining a change in actual blending fraction associated with the change in setting concerned relative to a value of the blending fraction associated with the reference setting,
wherein determining the calibration data includes causing at least one change of the setting,
so that a map is created, detailing for each of a set of one or more settings within a range or sub-range, what the actual change in blending fraction is when the setting is changed by a certain amount, **characterised in that**

determining the calibration data further includes obtaining values of the parameter before and after the change from at least one of the at least one sensors (19;42;90) that is located downstream of the mixing location (5;35;97), thereby making possible to measure the effect of a change in setting of the device (3,6;30,31;93).

**2.** Method according to claim 1, including at least one of:

determining and storing the calibration data for each of multiple reference settings and,
for at least one reference setting, determining and storing calibration data for each of multiple changes in setting relative to the reference setting.

**3.** Method according to claim 1 or 2, further including:

obtaining a target value of a parameter of the fluid downstream of the mixing location (5;35;97),
determining a new value of the blending fraction required to achieve the target value; and
determining a change in setting of the at least one device corresponding to an adjustment of the blending fraction to the new value using the stored calibration data.

**4.** Method according to any one of the preceding claims,
wherein the fluid treatment apparatus is a liquid treatment apparatus, and wherein the parameter of the liquid depending at least partially on the concentration of at least one of the components remaining in liquid led through the second fluid path to at least a certain higher extent than in liquid led through the first fluid path is one of:

electrical conductivity and
electrical conductivity adjusted for deviations from a reference temperature.

**5.** Method according to any one of the preceding claims,
wherein the fluid treatment apparatus is a liquid treatment apparatus and the fluid treatment part (4;34;96) is a liquid treatment part configured to remove components contributing to at least one of temporary and permanent hardness in water.

**6.** Method according to any one of the preceding claims,
wherein the fluid treatment apparatus is a liquid treatment apparatus and the fluid treatment part (4;34;96) is a liquid treatment part including an ion exchange material at least initially in a hydrogen form.

**7.** Method according to any one of the preceding claims,
including:

causing the setting of the at least one device (3,6;30,31;93) to be adjusted to end points of a range;
determining respective values of the measurement signal pertaining at the end points of the range;
determining the difference between the values of the measurement signal pertaining at the end points of the range; and
calculating the values for determining the change in actual blending fraction associated with a change in setting such as to depend on a ratio of a pre-determined change in blending fraction to the determined difference between the values of the measurement signal.

**8.** Method according to claim 7,
including storing data representative of at least one of the determined difference and the ratio in memory.

**9.** Method according to claim 7 or 8, including at least one of:

determining and storing the calibration data for at least one reference setting between the end points; and,
for at least one reference setting, determining and storing calibration data for at least one change in setting relative to the reference setting resulting in a setting between the end points.

**10.** Method according to any one of claims 7-9, wherein the at least one device (3,6;30,31;93) for adjusting the blending fraction includes at least one valve and an actuator (6;31) having a part (8;32) coupled to at least one valve element (12), wherein at least one of the end points corresponds to at least one of a limit of a range of movement of the actuator part (8;32) and a limit determined by a geometry of the valve element (12).

**11.** Method according to claim 9 or 10,
including causing at least one change in setting from the setting between the end points to obtain the calibration data.

**12.** Method of determining a measure of a concentration of components removable from fluid by a fluid treatment part (4;34;96) of a fluid treatment apparatus, including carrying out a method according to any one of claims 1-11,
wherein determining values of the measure of the concentration of components removable from the fluid includes determining a difference between a value of the parameter at a first ratio of fluid led through the first fluid path to fluid led through the second fluid path and a value of the parameter at a different ratio of fluid led through the first fluid path to fluid led through the second fluid path, and
wherein a value of the measure of the concentration of components is calculated using at least one value of the blending fraction obtained on the basis of the stored calibration data and a setting of the at least one device (3,6;30,31;93) for adjusting the blending fraction.

**13.** System for controlling the operation of a fluid treatment apparatus, the fluid treatment apparatus including:

at least one first fluid path and at least one second fluid path;
each first fluid path leading through a fluid treatment part (4;34;96) for treating fluid to remove to at least a certain extent at least some types of components from fluid led through the fluid treatment part (4;34;96),
each second fluid path bypassing at least one of the fluid treatment parts (4;34;96), such that components removable by the fluid treatment part (4;34;96) remain in fluid led through the second fluid path to at least a certain higher extent than in liquid led through a first fluid path;
a mixing location (5;35;97), where the first and second fluid paths join to mix fluid led through the first and second fluid paths; and
at least one device (3,6;30,31;93) for adjusting a blending fraction corresponding to a proportion of fluid led through the second fluid path in fluid downstream of the mixing location (5;35;97),
wherein the system includes:

an interface (18;45) to at least one sensor (19;42;90) for obtaining values of a parameter of the fluid depending at least partly on a concentration of the components removable by the bypassed fluid treatment part;
an interface (40) for providing a signal to cause the at least one device (3,6;30,31;93) to adjust the blending fraction;
a data processing unit (16;38) and memory (17;39),
wherein the system is configured,

for each of at least one reference setting of the at least one device (3,6;30,31;93) for adjusting the blending fraction, to determine and store for each of at least one change in setting relative to a reference setting data representative of a respective value for determining a change in actual blending fraction associated with the change in setting concerned relative to a value of the blending fraction associated with the reference setting,
thereby creating a map, detailing for each of a set of one or more settings within a range or sub-range, what the actual change in blending fraction is, when the setting is changed by a certain amount,
wherein the system is configured to cause at least one change of the setting in order to determine the data, **characterised in that**

the system is configured to obtain values of the parameter before and after the change from at least one of the at least one sensors (19;42;90) that is located downstream of the mixing location (5;35;97) in order to determine the data, thereby making possible to measure the effect of a change in setting of the device (3,6;30,31;93).

14. System according to claim 13, configured to carry out a method according to any one of claims 1-12.

15. Computer program product including a set of instructions capable, when incorporated in a machine-readable medium, of causing a system having information processing capabilities to carry out a method according to any one of claims 1-12.

**Patentansprüche**

1. Verfahren zum Adaptieren eines Systems (7; 26; 95), um den Betrieb einer Fluidbehandlungseinrichtung zu steuern, wobei die Fluidbehandlungseinrichtung einschließt:

mindestens einen ersten Fluidpfad und mindestens einen zweiten Fluidpfad,
wobei jeder erste Fluidpfad durch einen Fluidbehandlungsteil (4; 34; 96) führt, um Fluid so zu behandeln, dass mindestens eine Komponente zu mindestens einem Grad aus Fluid entfernt wird, welches durch den Fluidbehandlungsteil (4; 34; 96) geführt wird,
wobei jeder zweite Fluidpfad mindestens einen der Fluidbehandlungsteile (4; 34; 96) derart umgeht, dass mindestens eine Komponente, die durch den Fluidbehandlungsteil (4; 34; 96) entfernt werden kann, zu mindestens einem gewissen höheren Grad in Fluid verbleibt, das durch den zweiten Fluidpfad geführt wird, als in Fluid, das durch einen ersten Fluidpfad geführt wird;
einen Vermischungsort (5; 35; 97), an dem die ersten und zweiten Fluidpfade zusammenkommen, um Fluid, das durch die ersten und zweiten Fluidpfade geführt wird, zu vermischen;
mindestens eine Vorrichtung (3, 6; 30, 31; 93) zum Anpassen eines Mischungsteils, der einem Anteil von durch den zweiten Fluidpfad geführtem Fluid in Fluid stromabwärts des Vermischungsortes (5; 35; 97) entspricht; und
mindestens einen Sensor (19; 42; 90), um ein Messsignal zu erhalten, dessen Werte für einen Parameter des Fluids repräsentativ sind, der teilweise von einer Konzentration mindestens einer der Komponenten abhängt, die in Fluid, welches durch den zweiten Fluidpfad geführt wird, zu mindestens einem gewissen höheren Grad verbleiben, wobei das Verfahren einschließt:

für jede aus mindestens einer Referenzeinstellung der mindestens einen Vorrichtung zum Anpassen des Mischungsteils:

Bestimmen und Speichern, für jede aus mindestens einer Änderung der Einstellung in Bezug auf die Referenzeinstellung, von Kalibrierungsdaten, die für einen jeweiligen Wert repräsentativ sind, um eine Änderung des tatsächlichen Mischungsteils, der mit der betreffenden Änderung der Einstellung assoziiert ist, in Bezug auf einen Wert des Mischungsteils, der mit der Referenzeinstellung assoziiert ist, zu bestimmen,

wobei das Bestimmen der Kalibrierungsdaten das Bewirken mindestens einer Änderung der Einstellung einschließt,

sodass eine Karte erstellt wird, die für jede aus einer Reihe von einer oder mehreren Einstellungen innerhalb eines Bereichs oder Teilbereichs detailliert angibt, um was es sich bei der tatsächlichen Änderung des Mischungsteils handelt, wenn die Einstellung um einen gewissen Betrag geändert wird, **dadurch gekennzeichnet, dass**

das Bestimmen der Kalibrierungsdaten weiter das Erhalten von Werten des Parameters vor und nach der Änderung von mindestens einem der mindestens einen Sensoren (19; 42; 90) einschließt, der sich stromabwärts des Vermischungsortes (5; 35; 97) befindet, wodurch es ermöglicht wird, die Auswirkung einer Änderung der Einstellung der Vorrichtung (3, 6; 30, 31; 93) zu messen.

2. Verfahren nach Anspruch 1, das mindestens eines einschließt aus:

Bestimmen und Speichern der Kalibrierungsdaten für jede aus mehreren Referenzeinstellungen, und

für mindestens eine Referenzeinstellung, Bestimmen und Speichern von Kalibrierungsdaten für jede aus mehreren Änderungen der Einstellung in Bezug auf die Referenzeinstellung.

3. Verfahren nach Anspruch 1 oder 2, das weiter einschließt:

Erhalten eines Sollwerts eines Parameters des Fluids stromabwärts des Vermischungsortes (5; 35; 97), Bestimmen eines neuen Werts des Mischungsteils, der erforderlich ist, um den Sollwert zu erreichen; und Bestimmen einer Änderung der Einstellung der mindestens einen Vorrichtung, die einer Anpassung des Mischungsteils auf den neuen Wert entspricht, unter Verwendung der gespeicherten Kalibrierungsdaten.

4. Verfahren nach einem der vorstehenden Ansprüche, wobei es sich bei der Fluidbehandlungseinrichtung um eine Flüssigkeitsbehandlungseinrichtung handelt, und wobei es sich bei dem Parameter der Flüssigkeit, der mindestens teilweise von der Konzentration mindestens einer der Komponenten abhängt, die in Flüssigkeit, welche durch den zweiten Fluidpfad geführt wird, zu mindestens einem gewissen höheren Grad verbleiben als in Flüssigkeit, welche durch den ersten Fluidpfad geführt wird, um eines handelt aus:

elektrischer Leitfähigkeit, und elektrischer Leitfähigkeit, die um Abweichungen von einer Referenztemperatur angepasst ist.

5. Verfahren nach einem der vorstehenden Ansprüche, wobei es sich bei der Fluidbehandlungseinrichtung um eine Flüssigkeitsbehandlungseinrichtung handelt, und es sich beim Fluidbehandlungsteil (4; 34; 96) um einen Flüssigkeitsbehandlungsteil handelt, der dazu ausgebildet ist, Komponenten zu entfernen, die zu mindestens einer aus temporärer und permanenter Wasserhärte beitragen.

6. Verfahren nach einem der vorstehenden Ansprüche, wobei es sich bei der Fluidbehandlungseinrichtung um eine Flüssigkeitsbehandlungseinrichtung handelt, und es sich beim Fluidbehandlungsteil (4; 34; 96) um einen Flüssigkeitsbehandlungsteil handelt, der ein Ionenaustauschmaterial einschließt, das zumindest anfänglich in einer Wasserstoffform vorliegt.

7. Verfahren nach einem der vorstehenden Ansprüche, welches einschließt:

Bewirken, dass die Einstellung der mindestens einen Vorrichtung (3, 6; 30, 31; 93) auf Endpunkte eines Bereichs anpasst wird;

Bestimmen von jeweiligen Werten des Messsignals, die zu den Endpunkten des Bereichs gehören; Bestimmen der Differenz zwischen den Werten des Messsignals, die zu den Endpunkten des Bereichs gehören; und

Berechnen der Werte, um die Änderung des tatsächlichen Mischungsteils, die mit einer Änderung der Einstellung assoziiert ist, derart zu bestimmen, dass sie von einem Verhältnis einer vorbestimmten Änderung des Mischungsteils zu der bestimmten Differenz zwischen den Werten des Messsignals abhängt.

8. Verfahren nach Anspruch 7, das das Speichern von Daten, die für mindestens eines aus der bestimmten Differenz und dem Verhältnis repräsentativ sind, in einem Speicher einschließt.

9. Verfahren nach Anspruch 7 oder 8, das mindestens eines einschließt aus:

Bestimmen und Speichern der Kalibrierungsdaten für mindestens eine Referenzeinstellung zwischen den Endpunkten; und

für mindestens eine Referenzeinstellung, Bestimmen und Speichern von Kalibrierungsdaten für mindestens eine Änderung der Einstellung in Bezug auf die Referenzeinstellung, die zu einer Einstellung zwischen den Endpunkten führt.

10. Verfahren nach einem der Ansprüche 7-9, wobei die mindestens eine Vorrichtung (3, 6; 30, 31; 93) zum Anpassen des Mischungsteils mindestens ein Ventil und einen Aktor (6; 31) einschließt, der einen Teil (8; 32) aufweist, welcher mit mindestens einem Ventilelement (12) gekoppelt ist, wobei mindestens einer der Endpunkte mindestens einem aus einer Grenze eines Bewegungsbereichs des Aktorteils (8; 32) und einer Grenze entspricht, die von einer Geometrie des Ventilelements (12) bestimmt wird.

11. Verfahren nach Anspruch 9 oder 10, das das Bewirken von mindestens einer Änderung der Einstellung von der Einstellung zwischen den Endpunkten einschließt, um die Kalibrierungsdaten zu erhalten.

12. Verfahren zum Bestimmen eines Maßes einer Konzentration von Komponenten, die von einem Fluidbehandlungsteil (4; 34; 96) einer Fluidbehandlungseinrichtung aus Fluid entfernt werden können, welches das Ausführen eines Verfahrens nach einem der Ansprüche 1-11 einschließt, wobei das Bestimmen von Werten des Maßes der Konzentration von Komponenten, die aus dem Fluid entfernt werden können, das Bestimmen einer Differenz zwischen einem Wert des Parameters bei einem ersten Verhältnis von durch den ersten Fluidpfad geführtem Fluid zu durch den zweiten Fluidpfad geführtem Fluid, und einem Wert des Parameters bei einem anderen Verhältnis von durch den ersten Fluidpfad geführtem Fluid zu durch den zweiten Fluidpfad geführtem Fluid einschließt, und wobei ein Wert des Maßes der Konzentration von Komponenten unter Verwendung von mindestens einem Wert des Mischungsteils, der auf Basis der gespeicherten Kalibrierungsdaten erhalten wird, und einer Einstellung der mindestens einen Vorrichtung (3, 6; 30, 31; 93) zum Anpassen des Mischungsteils berechnet wird.

13. System, um den Betrieb einer Fluidbehandlungseinrichtung zu steuern, wobei die Fluidbehandlungseinrichtung einschließt:

mindestens einen ersten Fluidpfad und mindestens einen zweiten Fluidpfad;
wobei jeder erste Fluidpfad durch einen Fluidbehandlungsteil (4; 34; 96) führt, um Fluid so zu behandeln, dass mindestens einige Arten von Komponenten zu mindestens einem gewissen Grad aus Fluid entfernt werden, welches durch den Fluidbehandlungsteil (4; 34; 96) geführt wird,
wobei jeder zweite Fluidpfad mindestens einen der Fluidbehandlungsteile (4; 34; 96) derart umgeht, dass Komponenten, die durch den Fluidbehandlungsteil (4; 34; 96) entfernt werden können, zu mindestens einem gewissen höheren Grad in Fluid verbleiben, das durch den zweiten Fluidpfad geführt wird, als in Flüssigkeit, die durch einen ersten Fluidpfad geführt wird;
einen Vermischungsort (5; 35; 97), an dem die ersten und zweiten Fluidpfade zusammenkommen, um Fluid, das durch die ersten und zweiten Fluidpfade geführt wird, zu vermischen; und
mindestens eine Vorrichtung (3, 6; 30, 31; 93) zum Anpassen eines Mischungsteils, der einem Anteil von durch den zweiten Fluidpfad geführtem Fluid in Fluid stromabwärts des Vermischungsortes (5; 35; 97) entspricht,
wobei das System einschließt:

eine Schnittstelle (18; 45) zu mindestens einem Sensor (19; 42; 90), um Werte eines Parameters des Fluids zu erhalten, der mindestens teilweise von einer Konzentration der Komponenten abhängt, die durch den umgangenen Fluidbehandlungsteil entfernt werden können;

eine Schnittstelle (40) zum Bereitstellen eines Signals, um die mindestens eine Vorrichtung (3, 6; 30, 31; 93) dazu zu bringen, den Mischungsteil zu anpassen;

eine Datenverarbeitungseinheit (16; 38), und einen Speicher (17; 39),

wobei das System dazu ausgebildet ist,

für jede aus mindestens einer Referenzeinstellung der mindestens einen Vorrichtung (3, 6; 30, 31; 93) zum Anpassen des Mischungsteils für jede aus mindestens einer Änderung der Einstellung in Bezug auf eine Referenzeinstellung Daten zu bestimmen und zu speichern, die für einen jeweiligen Wert repräsentativ sind, um eine Änderung des tatsächlichen Mischungsteils, der mit der betreffenden Änderung der Einstellung assoziiert ist, in Bezug auf einen Wert des Mischungsteils, der mit der Referenzeinstellung assoziiert ist, zu bestimmen,

wodurch eine Karte erstellt wird, die für jede aus einer Reihe von einer oder mehreren Einstellungen innerhalb eines Bereichs oder Teilbereichs detailliert angibt, um was es sich bei der tatsächlichen Änderung des Mischungsteils handelt, wenn die Einstellung um einen gewissen Betrag geändert wird,

wobei das System dazu ausgebildet ist, mindestens eine Änderung der Einstellung zu bewirken, um die Daten zu bestimmen,

**dadurch gekennzeichnet, dass**

das System dazu ausgebildet ist, Werte des Parameters vor und nach der Änderung von mindestens einem der mindestens einen Sensoren (19; 42; 90) zu erhalten, der sich stromabwärts des Vermischungsortes (5; 35; 97) befindet,, um die Daten zu bestimmen, wodurch es ermöglicht wird, die Auswirkung einer Änderung der Einstellung der Vorrichtung (3, 6; 30, 31; 93) zu messen.

14. System nach Anspruch 13, das dazu ausgebildet ist, ein Verfahren nach einem der Ansprüche 1-12 durchzuführen.

15. Computerprogrammprodukt, das eine Reihe von Anweisungen einschließt, die, wenn sie in einem maschinenlesbaren Medium integriert werden, in der Lage sind, ein System, das Informationsverarbeitungsfähigkeiten aufweist, dazu zu bringen, ein Verfahren nach einem der Ansprüche 1-12 auszuführen.

**Revendications**

1. Procédé d'adaptation d'un système (7 ; 26; 95) pour commander un fonctionnement d'un appareil de traitement de fluide, l'appareil de traitement de fluide incluant :

au moins un premier trajet de fluide et au moins un second trajet de fluide,

chaque premier trajet de fluide menant à travers une partie de traitement de fluide (4 ; 34 ; 96) pour traiter du fluide afin d'enlever dans au moins une certaine mesure au moins un composant du fluide mené à travers la partie de traitement de fluide (4 ; 34 ; 96),

chaque second trajet de fluide contournant au moins l'une des parties de traitement de fluide (4 ; 34 ; 96), de sorte qu'au moins un composant pouvant être enlevé par la partie de traitement de fluide (4 ; 34 ; 96) reste dans du fluide mené à travers le second trajet de fluide dans au moins une certaine mesure plus élevée que dans du fluide mené à travers un premier trajet de fluide ;

un emplacement de mélange (5 ; 35 ; 97), où les premier et second trajets de fluide se rejoignent pour mélanger du fluide mené à travers les premier et second trajets de fluide ;

au moins un dispositif (3, 6; 30, 31; 93) pour ajuster une fraction de mélange correspondant à une proportion de fluide mené à travers le second trajet de fluide dans du fluide en aval de l'emplacement de mélange (5 ; 35 ; 97) ; et

au moins un capteur (19 ; 42; 90) pour obtenir un signal de mesure, dont des valeurs sont représentatives d'un paramètre du fluide dépendant partiellement d'une concentration d'au moins un des composants restant dans le fluide mené à travers le second trajet de fluide dans au moins une certaine mesure plus élevée, le procédé incluant les étapes consistant à :

pour chacun d'au moins un réglage de référence du au moins un dispositif pour ajuster la fraction de mélange :

déterminer et stocker pour chacun d'au moins un changement de réglage par rapport à des données d'étalonnage de réglage de référence représentatives d'une valeur respective pour déterminer un changement de fraction de mélange réelle associée au changement de réglage concerné par rapport à une valeur de la fraction de mélange associée au réglage de référence,

dans lequel la détermination des données d'étalonnage inclut l'étape consistant à provoquer au moins un changement du réglage,

de sorte qu'une carte est créée, détaillant pour chacun d'un ensemble d'un ou plusieurs réglages, dans une plage ou sous-plage, quel est le changement réel de la fraction de mélange lorsque le réglage est modifié d'une certaine quantité, **caractérisé en ce que**

la détermination des données d'étalonnage inclut en outre l'étape consistant à obtenir des valeurs du paramètre avant et après le changement à partir d'au moins un des au moins un capteurs (19 ; 42 ; 90) qui est positionné en aval de l'emplacement de mélange (5 ; 35 ; 97), en permettant ainsi de mesurer l'effet d'un changement de réglage du dispositif (3,6 ; 30,31 ; 93).

2. Procédé selon la revendication 1, incluant au moins l'une des étapes consistant à :

déterminer et stocker les données d'étalonnage pour chacun de multiples réglages de référence et, pour au moins un réglage de référence, déterminer et stocker des données d'étalonnage pour chacun de multiples changements de réglage par rapport au réglage de référence.

3. Procédé selon la revendication 1 ou 2, incluant en outre les étapes consistant à :

obtenir une valeur cible d'un paramètre du fluide en aval de l'emplacement de mélange (5 ; 35 ; 97), déterminer une nouvelle valeur de la fraction de mélange requise pour atteindre la valeur cible ; et déterminer un changement de réglage du au moins un dispositif correspondant à un ajustement de la fraction de mélange à la nouvelle valeur en utilisant les données d'étalonnage stockées.

4. Procédé selon l'une quelconque des revendications précédentes, dans lequel l'appareil de traitement de fluide est un appareil de traitement de liquide, et dans lequel le paramètre du liquide dépend au moins partiellement de la concentration d'au moins un des composants restant dans le liquide mené à travers le second trajet du fluide dans au moins une certaine mesure plus élevée que dans le liquide mené à travers le premier trajet de fluide est une parmi :

une conductivité électrique, et une conductivité électrique ajustée pour des écarts par rapport à une température de référence.

5. Procédé selon l'une quelconque des revendications précédentes, dans lequel l'appareil de traitement de fluide est un appareil de traitement de liquide et la partie de traitement de fluide (4 ; 34 ; 96) est une partie de traitement de liquide configurée pour enlever des composants contribuant à au moins une dureté temporaire et permanente dans l'eau.

6. Procédé selon l'une quelconque des revendications précédentes, dans lequel l'appareil de traitement de fluide est un appareil de traitement de liquide et la partie de traitement de fluide (4 ; 34 ; 96) est une partie de traitement de liquide incluant un matériau échangeur d'ions au moins initialement sous une forme d'hydrogène.

7. Procédé selon l'une quelconque des revendications précédentes incluant les étapes consistant à :

amener le réglage du au moins un dispositif (3,6 ; 30, 31 ; 93) à être ajusté aux points d'extrémité d'une plage ; déterminer des valeurs respectives du signal de mesure se rapportant aux points d'extrémité de la plage ; déterminer la différence entre les valeurs du signal de mesure se rapportant aux points d'extrémité de la plage ; et calculer les valeurs pour déterminer le changement de fraction de mélange réelle associée à un changement de réglage de manière à dépendre d'un rapport d'un changement prédéterminé de fraction de mélange par rapport à la différence déterminée entre les valeurs du signal de mesure.

8. Procédé selon la revendication 7, incluant un stockage de données représentatives d'au moins un parmi la différence déterminée et le rapport en mémoire.

9. Procédé selon la revendication 7 ou 8, incluant l'une des étapes consistant à :

déterminer et stocker les données d'étalonnage pour au moins un réglage de référence entre les points d'extrémité ; et,

pour au moins un réglage de référence, déterminer et stocker des données d'étalonnage pour au moins un changement de réglage par rapport au réglage de référence aboutissant à un réglage entre les points d'extrémité.

**10.** Procédé selon l'une quelconque des revendications 7 à 9,

dans lequel le au moins un dispositif (3, 6 ; 30, 31 ; 93) pour ajuster la fraction de mélange inclut au moins une vanne et un actionneur (6 ; 31) ayant une partie (8 ; 32) couplée à au moins un élément de vanne (12), dans lequel au moins l'un des points d'extrémité correspond à au moins l'une d'une limite d'une plage de mouvement de la partie d'actionneur (8 ; 32) et d'une limite déterminée par une géométrie de l'élément de vanne (12).

**11.** Procédé selon la revendication 9 ou 10,

incluant l'étape consistant à provoquer au moins un changement de réglage par rapport au réglage entre les points d'extrémité pour obtenir les données d'étalonnage.

**12.** Procédé de détermination d'une mesure d'une concentration de composants pouvant être enlevés d'un fluide par une partie de traitement de fluide (4 ; 34 ; 96) d'un appareil de traitement de fluide, incluant une mise en œuvre d'un procédé selon l'une quelconque des revendications 1 à 11,

dans lequel la détermination de valeurs de la mesure de la concentration de composants pouvant être enlevés du fluide inclut une détermination d'une différence entre une valeur du paramètre à un premier rapport du fluide mené à travers le premier trajet de fluide au fluide mené à travers le second trajet de fluide et une valeur du paramètre à un rapport différent du fluide mené à travers le premier trajet de fluide au fluide mené à travers le second trajet de fluide, et

dans lequel une valeur de la mesure de la concentration de composants est calculée en utilisant au moins une valeur de la fraction de mélange obtenue sur la base des données d'étalonnage stockées et un réglage du au moins un dispositif (3, 6 ; 30, 31 ; 93) pour ajuster la fraction de mélange.

**13.** Système pour commander le fonctionnement d'un appareil de traitement de fluide, l'appareil de traitement de fluide incluant :

au moins un premier trajet de fluide et au moins un second trajet de fluide ;

chaque premier trajet de fluide menant à travers une partie de traitement de fluide (4 ; 34 ; 96) pour traiter du fluide afin d'enlever au moins dans une certaine mesure au moins certains types de composants d'un fluide mené à travers la partie de traitement de fluide (4 ; 34 ; 96),

chaque second trajet de fluide contournant au moins l'une des parties de traitement de fluide (4 ; 34 ; 96), de sorte que les composants pouvant être enlevés par la partie de traitement de fluide (4 ; 34 ; 96) restent dans du fluide mené à travers le second trajet de fluide dans au moins une certaine mesure plus élevée que dans du liquide mené à travers un premier trajet de fluide ;

un emplacement de mélange (5 ; 35 ; 97), où les premier et second trajets de fluide se rejoignent pour mélanger du fluide mené à travers les premier et second trajets de fluide ; et

au moins un dispositif (3,6 ; 30, 31 ; 93) pour ajuster une fraction de mélange correspondant à une proportion de fluide mené à travers le second trajet de fluide dans du fluide en aval de l'emplacement de mélange (5 ; 35 ; 97),

dans lequel le système inclut :

une interface (18 ; 45) avec au moins un capteur (19 ; 42 ; 90) pour obtenir des valeurs d'un paramètre du fluide dépendant au moins en partie d'une concentration des composants pouvant être enlevés par la partie de traitement de fluide contournée ;

une interface (40) pour fournir un signal pour amener le au moins un dispositif (3, 6 ; 30, 31 ; 93) à ajuster la fraction de mélange ;

une unité de traitement de données (16 ; 38) et une mémoire (17 ; 39),

dans lequel le système est configuré,

pour chacun d'au moins un réglage de référence du au moins un dispositif (3,6 ; 30, 31 ; 93) pour ajuster la fraction de mélange, pour déterminer et stocker pour chacun d'au moins un changement de réglage par rapport à des données de réglage de référence représentatives d'une valeur respective pour déterminer un changer de fraction de mélange réelle associée au changement de réglage concerné par rapport à une valeur de la fraction de mélange associée au réglage de référence,

en créant ainsi une carte, en détaillant pour chacun d'un ensemble d'un ou plusieurs réglages dans une plage ou sous-plage, quel est le changement réel de la fraction de mélange, lorsque le réglage est modifié d'une certaine quantité,

dans lequel le système est configuré pour provoquer au moins un changement du réglage pour déterminer les données,

**caractérisé en ce que**

le système est configuré pour obtenir des valeurs du paramètre avant et après le changement à partir d'au moins un des au moins un capteurs (19; 42; 90) qui est positionné en aval de l'emplacement de mélange (5 ; 35 ; 97) afin de déterminer les données, en permettant ainsi de mesurer l'effet d'un changement de réglage du dispositif (3,6 ; 30, 31 ; 93).

14. Système selon la revendication 13, configuré pour mettre en œuvre un procédé selon l'une quelconque des revendications 1 à 12.

15. Produit de programme informatique incluant un ensemble d'instructions capables, lorsqu'elles sont incorporées dans un support lisible par machine, d'amener un système ayant des capacités de traitement d'informations à exécuter un procédé selon l'une quelconque des revendications 1 à 12.

Fig. 1

Fig. 2

Fig. 3

Fig. 4

```
        ●
        │
        ▼
┌──────────────────┐ ─ 55
│   Close bypass   │
└──────────────────┘
        │
        ▼
┌──────────────────┐ ─ 56
│Determine conductivity│
└──────────────────┘
        │
        ▼
┌──────────────────┐ ─ 57
│   Store value    │
└──────────────────┘
        │
        ▼
┌──────────────────┐ ─ 58
│ Increment  setting│
└──────────────────┘
        │
        ▼
┌──────────────────┐ ─ 59
│Determine conductivity│
└──────────────────┘
        │
        ▼
┌──────────────────┐ ─ 60
│   Store value    │
└──────────────────┘
        │
        ▼        [Further increase possible]
        ◇
        │  [End of range reached]
        ▼
┌──────────────────────────────┐ ─ 61
│Calculate actual blending fraction│
│change for multiple setting changes│
└──────────────────────────────┘
        │
        ▼
┌──────────────────┐ ─ 62
│Store values in association│
│    with  setting  │
└──────────────────┘
        │
        ▼     [∃ setting w.o. stored values]
        ◇
        │  [All values for all settings stored]
        ▼
        ●
```

Fig. 5

[cartridge placement detected]

Close bypass —64

Determine conductivity —65

Store value —66

Obtain target hardness value —63

Adjust setting to 2$^{nd}$ end of range —67

Determine conductivity —68

Determine  hardness of untreated water —69

Store value —70

Determine target value of blending fraction —71

Determine setting value for target value —72

Ⓐ

Fig. 6A

(A)

Adjust to operating point —— 73

Determine conductivity —— 74

Store value —— 75

Adjust setting —— 76

Determine conductivity —— 77

Determine actual change in blending fraction —— 78

Store value in association with setting change —— 79

[Further data required]

[Sufficient calibration data stored]

Control hardness —— 80

[Change in blending fraction outside range]

[End of control based on hardness
of untreated water]

Fig. 6B

Fig. 7

Fig. 8

- 98 Obtain upstream conductivity value
- 99 Obtain downstream conductivity value
- 100 Determine conductivity change due to softening
- 101 Determine conversion factor
- 102 Convert to temporary hardness

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19918073 A1
- DE 102010001373 A1
- WO 2011064325 A2
- WO 2009101188 A1
- EP 2013064112 W